(19) **Europäisches Patentamt / European Patent Office / Office européen des brevets**

(11) **EP 4 697 793 A1**

(12) **EUROPEAN PATENT APPLICATION**
published in accordance with Art. 153(4) EPC

(43) Date of publication:
**18.02.2026   Bulletin 2026/08**

(21) Application number: **24803030.6**

(22) Date of filing: **08.05.2024**

(51) International Patent Classification (IPC):
**H04W 28/02** (2009.01)

(52) Cooperative Patent Classification (CPC):
**H04W 28/02**

(86) International application number:
**PCT/CN2024/091785**

(87) International publication number:
**WO 2024/230750 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023   CN 202310522381**
**04.07.2023   CN 202310816004**

(71) Applicant: **Huawei Technologies Co., Ltd.**
**Shenzhen, Guangdong 518129 (CN)**

(72) Inventors:
• **ZHANG, Yanqing**
  **Shenzhen, Guangdong 518129 (CN)**
• **XU, Haibo**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **INFORMATION REPORTING METHOD AND APPARATUS, AND SYSTEM**

(57)     This application may be applied to the field of communication technologies, and provides an information reporting method, an apparatus, and a system, to report delay information of to-be-transmitted data. The method includes: A first device sends first information, where the first information includes a first field, and the first field indicates first delay information and whether the first information includes a first data amount; and when the first field indicates that the first information includes the first data amount, the first information further includes a second field, the second field indicates the first data amount, the first data amount is a data amount of first data, and the first delay information is delay information of the first data, where the first field is different from the second field.

FIG. 8

**Description**

This application claims priorities to Chinese Patent Application No. 202310522381.9, filed with the China National Intellectual Property Administration on May 9, 2023 and entitled "DELAY REPORTING METHOD AND APPARATUS", and to Chinese Patent Application No. 202310816004.6, filed with the China National Intellectual Property Administration on July 4, 2023 and entitled "INFORMATION REPORTING METHOD, APPARATUS, AND SYSTEM", both of which are incorporated herein by reference in their entireties.

**TECHNICAL FIELD**

This application relates to the field of communication technologies, and in particular, to an information reporting method, an apparatus, and a system.

**BACKGROUND**

In an uplink transmission scenario of a communication system, a terminal device may send a buffer status report (buffer status report, BSR) to a network device to report an amount of to-be-sent uplink data. The network device may allocate a proper uplink resource to the terminal device based on the BSR, to implement uplink scheduling.

However, a conventional BSR reporting method supports only reporting of an amount of data. In a 5G system, some delay-sensitive services have a strict requirement on air interface transmission time. For example, an extended reality (eXtended Reality, XR) service may require that uplink transmission of a data frame be completed within 30 ms. If the conventional BSR reporting method is used, there is a high probability that a resource scheduled by the network device cannot support transmission of service data within required air interface transmission time.

**SUMMARY**

Embodiments of this application provide an information reporting method, an apparatus, and a system, to report delay information of to-be-transmitted data.

To achieve the foregoing objectives, the following technical solutions are used in embodiments of this application.

According to a first aspect, an information reporting method is provided. The method may be performed by a first device, or may be performed by a module (for example, a processor, a chip, or a chip system) applied to the first device. The following uses an example in which the first device performs the method for description. The method includes: The first device sends first information, where the first information includes a first field, and the first field indicates first delay information and whether the first information includes a first data amount. When the first field indicates that the first information includes the first data amount, the first information further includes a second field, the second field indicates the first data amount, the first data amount is a data amount of first data, and the first delay information is delay information of the first data. In addition, when the first field indicates that the first information does not include the first data amount, the first information does not include the second field. The first field is different from the second field.

According to the information reporting method provided in this embodiment of this application, the first field in the first information may indicate both the first delay information and whether the first information includes the first data amount, and further, the second field different from the first field indicates the first data amount. Only if the first data amount is reported, the second field appears in the first information. If the first data amount is not reported, the second field does not appear in the first information. In this way, only a data amount of data that matches delay information can be reported while the delay information is indicated, to avoid reporting invalid delay information and data amount information.

With reference to the first aspect, in a possible design, the second field includes a first index, and the first index indicates the first data amount.

This solution provides a manner of indicating a corresponding data amount by using an index.

With reference to the first aspect, in a possible design, the method further includes: The first device obtains a first status report list, where the first status report list includes N indexes and N data amounts, the N indexes respectively correspond to the N data amounts, the first index is one of the N indexes, and N is a positive integer.

According to this solution, a correspondence between the first index and the first data amount may be determined based on the first status report list obtained by the first device.

With reference to the first aspect, in a possible design, the method further includes: The first device obtains first configuration information, where the first configuration information is used to configure first duration, the first duration is valid transmission duration of the first data, and a start moment of the first duration is an arrival moment of the first data.

According to this solution, the first device may determine the valid transmission duration of the first data based on the first configuration information.

With reference to the first aspect, in a possible design, the first configuration information is used to configure a packet discard timer.

The first device starts the packet discard timer when the first data arrives, and discards the first data when the packet discard timer expires, where the first duration is running duration of the packet discard timer.

According to this solution, the valid transmission duration of the first data may be determined based on the configured packet discard timer.

With reference to the first aspect, in a possible design, the method further includes: The first device obtains second duration, where the second duration is a remaining transmission delay budget of the first data, a start moment of the second duration is a moment at which the first information is sent, and an end moment of the second duration is an end moment of the first duration.

According to this solution, the remaining transmission delay budget of the first data may be determined based on the valid transmission duration of the first data.

With reference to the first aspect, in a possible design, the first delay information includes a time interval, the time interval indicates the remaining transmission delay budget of the first data, and the time interval includes second duration.

According to this solution, the first information may indicate that duration of the remaining transmission delay budget of the first data is within the time interval included in the first delay information.

With reference to the first aspect, in a possible design, the valid transmission duration is related to the remaining transmission delay budget of the first data.

With reference to the first aspect, in a possible design, the first information further includes a third field, the third field indicates a first logical channel group, and the first data is data in the first logical channel group.

According to this solution, the first information may indicate a logical channel group to which the first data belongs.

With reference to the first aspect, in a possible design, the third field further indicates whether the first information includes a second data amount, and the second data amount is a data amount of data in the first logical channel group.

With reference to the first aspect, in a possible design, when the third field indicates that the first information includes a second data amount, the first field indicates delay information of the data in the first logical channel group.

According to this solution, the first information includes the first field only when the third field indicates that the first information includes the data amount of the data in the first logical channel group, and the first information does not include the first field when the third field indicates that the first information does not include the data amount of the data in the first logical channel group, so that reporting of an invalid first field can be avoided.

With reference to the first aspect, in a possible design, the first information further includes a fourth field, the fourth field indicates importance of second data or importance of the first data, the second data is data indicated by all second fields included in the first information, and a data amount of the second data is a third data amount.

According to this solution, the first information may indicate importance of data corresponding to a total data amount reported based on the first information, or may indicate importance of data corresponding to a reported first data amount.

With reference to the first aspect, in a possible design, the second data includes third data, and the third data is unimportant data in the second data; and the method further includes: The first device obtains a first threshold, where the fourth field indicates whether a data amount of the third data reaches the first threshold; or the fourth field indicates whether a ratio of the data amount of the third data to the third data amount reaches the first threshold.

According to this solution, the first information may indicate whether a data amount of unimportant data or a proportion of unimportant data in data corresponding to a total data amount reported based on the first information reaches a threshold, to indicate importance of the data corresponding to the reported total data amount.

With reference to the first aspect, in a possible design, the first data includes fourth data, and the fourth data is unimportant data in the first data; and the method further includes: The first device obtains a second threshold, where the fourth field indicates whether a data amount of the fourth data reaches the second threshold; or the fourth field indicates whether a ratio of the data amount of the fourth data to the first data amount reaches the second threshold.

According to this solution, the first information may indicate whether a data amount of unimportant data or a proportion of unimportant data in data corresponding to a first data amount reported based on the first information reaches a threshold, to indicate importance of the data corresponding to the reported first data amount.

According to a second aspect, an information reporting method is provided. The method may be performed by a second device, or may be performed by a module (for example, a processor, a chip, or a chip system) used in the second device. The following uses an example in which the second device performs the method for description. The method includes: The first device receives first information, where the first information includes a first field, and the first field indicates first delay information and whether the first information includes a first data amount. When the first field indicates that the first information includes the first data amount, the first information further includes a second field, the second field indicates the first data amount, the first data amount is a data amount of first data, and the first delay information is delay information of the first data. In addition, when the first field indicates that the first information does not include the first data amount, the first information does not include the second field. The first field is different from the second field.

According to the information reporting method provided in this embodiment of this application, the first field in the first information may indicate both the first delay information and whether the first information includes the first data amount, and further, the second field different from the first field indicates the first data amount. Only if the first data amount is reported, the second field appears in the first information. If the first data amount is not reported, the second field does not appear in the first information. In this way, only a data amount of data that matches delay information can be reported while the delay information is indicated, to avoid reporting invalid delay information and data amount information.

With reference to the second aspect, in a possible design, the second field includes a first index, and the first index indicates the first data amount.

This solution provides a manner of indicating a corresponding data amount by using an index.

With reference to the second aspect, in a possible design, the method further includes: The second device obtains a first status report list, where the first status report list includes N indexes and N data amounts, the N indexes respectively correspond to the N data amounts, the first index is one of the N indexes, and N is a positive integer.

According to this solution, the second device may determine a correspondence between the first index and the first data amount based on the obtained first status report list, so that the data amount reported based on the first information can be correctly interpreted.

With reference to the second aspect, in a possible design, the method further includes: The second device sends first configuration information, where the first configuration information is used to configure the first duration, the first duration is valid transmission duration of the first data, and a start moment of the first duration is an arrival moment of the first data.

With reference to the second aspect, in a possible design, the first delay information includes a time interval, and the time interval indicates a remaining transmission delay budget of the first data.

According to this solution, the first information may indicate that duration of the remaining transmission delay budget of the first data is within the time interval included in the first delay information.

With reference to the second aspect, in a possible design, the first information further includes a third field, the third field indicates a first logical channel group, and the first data is data in the first logical channel group.

According to this solution, the first information may indicate a logical channel group to which the first data belongs.

With reference to the second aspect, in a possible design, the third field further indicates whether the first information includes a second data amount, and the second data amount is a data amount of data in the first logical channel group.

With reference to the second aspect, in a possible design, when the third field indicates that the first information includes the second data amount, the first field indicates delay information of the data in the first logical channel group.

According to this solution, the first information includes the first field only when the third field indicates that the first information includes the data amount of the data in the first logical channel group, and the first information does not include the first field when the third field indicates that the first information does not include the data amount of the data in the first logical channel group, so that reporting of an invalid first field can be avoided.

With reference to the second aspect, in a possible design, the first information further includes a fourth field, the fourth field indicates importance of second data or importance of the first data, the second data is data indicated by all second fields included in the first information, and a data amount of the second data is a third data amount.

According to this solution, the first information may indicate importance of data corresponding to a total data amount reported based on the first information, or may indicate importance of data corresponding to a reported first data amount.

With reference to the second aspect, in a possible design, the second data includes third data, and the third data is unimportant data in the second data; and the fourth field indicates whether a data amount of the third data reaches a first threshold; or the fourth field indicates whether a ratio of the data amount of the third data to the third data amount reaches the first threshold.

According to this solution, the first information may indicate whether a data amount of unimportant data or a proportion of unimportant data in data corresponding to a total data amount reported based on the first information reaches a threshold, to indicate importance of the data corresponding to the reported total data amount.

With reference to the second aspect, in a possible design, the first data includes fourth data, and the fourth data is unimportant data in the first data; and the fourth field indicates whether a data amount of the fourth data reaches a second threshold; or the fourth field indicates whether a ratio of the data amount of the fourth data to the first data amount reaches a first threshold.

According to this solution, the first information may indicate whether a data amount of unimportant data or a proportion of unimportant data in data corresponding to a first data amount reported based on the first information reaches a threshold, to indicate importance of the data corresponding to the reported first data amount.

According to a third aspect, a communication apparatus is provided, to implement the methods. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects or the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver, a transceiver machine, or a communication interface.

According to a fourth aspect, a communication apparatus is provided, and includes a processor and a memory. The memory is configured to store computer instructions, and when the processor executes the instructions, the communication apparatus is enabled to perform the method according to any one of the aspects.

According to a fifth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the foregoing aspects.

According to a sixth aspect, a communication apparatus is provided, and includes at least one processor. The processor is configured to execute a computer program or instructions stored in a memory, to enable the communication apparatus to perform the method according to any one of the foregoing aspects. The memory may be coupled to the processor, or may be independent of the processor.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to an eighth aspect, a computer program product including instructions is provided. When the computer program product is run on a communication apparatus, the communication apparatus is enabled to perform the method according to any one of the foregoing aspects.

According to a ninth aspect, a communication apparatus (for example, the communication apparatus may be a chip or a chip system) is provided. The communication apparatus includes a processor, configured to implement the functions in any one of the aspects.

In some possible designs, the communication apparatus includes a memory, and the memory is configured to store necessary program instructions and data.

In some possible designs, when the apparatus is a chip system, the apparatus may include a chip, or may include a chip and another discrete component.

The communication apparatus according to any one of the third aspect to the ninth aspect may be the first device in the first aspect, or an apparatus included in the first device, for example, a chip or a chip system; or the communication apparatus may be the second device in the second aspect, or an apparatus included in the second device, for example, a chip or a chip system.

It may be understood that when the communication apparatus according to any one of the third aspect to the ninth aspect is a chip, a sending action/function of the communication apparatus may be understood as outputting information, and a receiving action/function of the communication apparatus may be understood as inputting information.

For technical effects brought by any design of the third aspect to the ninth aspect, refer to the technical effects brought by different designs of the first aspect and the second aspect. Details are not described herein again.

According to a tenth aspect, a communication system is provided. The communication system includes a first device and a second device. The first device is configured to implement the method according to the first aspect, and the second device is configured to implement the method according to the second aspect.

## BRIEF DESCRIPTION OF DRAWINGS

FIG. 1 is a diagram of a structure of a BSR;
FIG. 2 is a diagram of a structure of another BSR;
FIG. 3 is a diagram of a structure of a DSR;
FIG. 4 is a diagram of a structure of another DSR;
FIG. 5 is a diagram of a structure of another DSR;
FIG. 6 is a diagram of a structure of a communication system according to an embodiment of this application;
FIG. 7 is a diagram of a structure of a communication apparatus according to an embodiment of this application;
FIG. 8 is an interaction diagram of an information reporting method according to an embodiment of this application;
FIG. 9 is a diagram 1 of a structure of first information according to an embodiment of this application;

FIG. 10 is a diagram 2 of a structure of first information according to an embodiment of this application;

FIG. 11 is a diagram of a structure of other first information according to an embodiment of this application;

FIG. 12 is a diagram 1 of a structure of other first information according to an embodiment of this application;

FIG. 13 is a diagram 2 of a structure of other first information according to an embodiment of this application;

FIG. 14 is a diagram of a structure of other first information according to an embodiment of this application;

FIG. 15 is a diagram of a structure of other first information according to an embodiment of this application;

FIG. 16 is a diagram of a structure of other first information according to an embodiment of this application;

FIG. 17 is a diagram of a structure of other first information according to an embodiment of this application;

FIG. 18 is a diagram of a structure of other first information according to an embodiment of this application;

FIG. 19 is a diagram of storage duration according to an embodiment of this application;

FIG. 20 is a diagram of duration of a remaining transmission delay budget according to an embodiment of this application;

FIG. 21 is a diagram of other storage duration according to an embodiment of this application;

FIG. 22 is a diagram of other duration of a remaining transmission delay budget according to an embodiment of this application;

FIG. 23 is an interaction diagram of another information reporting method according to an embodiment of this application; and

FIG. 24 is a diagram of a structure of another communication apparatus according to an embodiment of this application.

## DESCRIPTION OF EMBODIMENTS

For ease of understanding the technical solutions in embodiments of this application, related technologies of this application are first briefly described below.

1. Field

In embodiments of this application, the field is a carrier used to carry at least one piece of information, and a unit of the field may be an information amount unit such as a bit (bit) or a byte (byte or octet). 1 byte is equal to 8 bits.

It should be noted that a size of the field is not limited in embodiments of this application. For example, a size of a field may be one or more bits, or may be one or more bytes.

2. BSR:

In an uplink transmission scenario, a terminal device may send a BSR to a network device to report an amount of to-be-sent uplink data. The network device may allocate a proper uplink resource to the terminal device based on the BSR, to implement uplink scheduling.

Currently, one terminal device may be configured with a plurality of logical channel groups (logical channel group, LCG), for example, eight LCGs, and each LCG may further include several logical channels (logical channel, LCH). When configuring a parameter of the LCH for each terminal device, for example, by using a radio resource control (radio resource control, RRC) message, the base station may configure, for the LCH by using signaling, an LCG corresponding to the LCH.

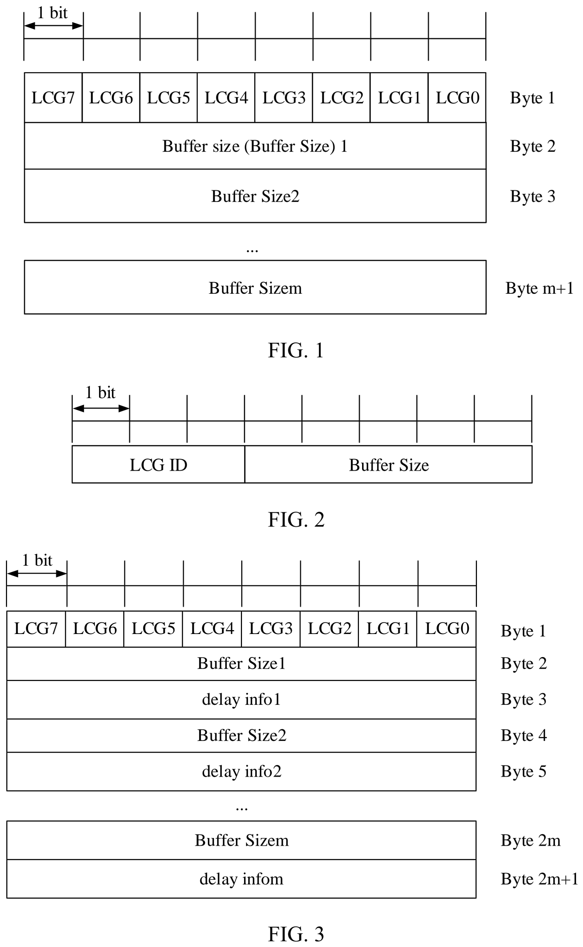

A data amount on an LCH included in the LCG is usually reported for the BSR at a granularity of the LCG. Currently, the BSR is a MAC control element (control element, CE), and therefore may also be referred to as a BSR MAC CE. The BSR has a plurality of formats. The following describes two formats: a long BSR (long BSR) and a short BSR (short BSR) respectively with reference to FIG. 1 and FIG. 2.

A typical format of the long BSR may be shown in FIG. 1. A size of each of first eight fields (an LCG0 field to an LCG7 field) of the BSR is 1 bit, and indicates whether a BSR MAC CE includes a data amount of a corresponding LCG, or whether a data amount of the LCG is reported in the BSR MAC CE. Refer to FIG. 1. A common size of the LCG0 field to the LCG7 field of the BSR is 1 byte, which may be referred to as a byte 1. In addition, the BSR may further include a buffer size (Buffer Size) field indicating a data amount of an LCG.

In the BSR, a quantity of Buffer Size fields is determined based on a quantity of fields in the LCG0 field to the LCG7 field that indicate a data amount of a corresponding LCG that is included in the BSR MAC CE. For example, the LCG1 field in the BSR corresponds to LCG1, and a value in the field may indicate whether the MAC CE includes a data amount on LCG1. When LCG1 = 1, it indicates that the BSR MAC CE includes the data amount on LCG1. In this case, the BSR further includes a Buffer Size field (which may also be understood as a Buffer Size field corresponding to LCG1) indicating the data amount on LCG1. When LCG1 = 0, it indicates that the BSR MAC CE does not include the data amount on LCG1. In this case, it may be understood that a Buffer Size field corresponding to LCG1 does not appear or is not displayed in the BSR MAC CE, or it may be understood that a bit width of the Buffer Size field corresponding to LCG1 is 0 bits. Further, still refer to FIG. 1. When the BSR MAC CE has m LCGs having to-be-transmitted data, that is, when values of any m LCG fields in the LCG0 field to the LCG7 field are set to 1, the BSR MAC CE further includes m corresponding Buffer Size fields: a Buffer Size1 field, a Buffer Size2 field, ..., and a Buffer Sizem field, where a size of the Buffer Size field is 1 byte, and the m Buffer Size fields respectively correspond to a byte 2, a byte 3, ..., and a byte m+1. In this case, as shown in FIG. 1, the BSR MAC CE includes a byte 1, a byte 2, a byte 3, ..., and a byte m+1, and a size of the BSR MAC CE is m+1 octal characters.

It should be noted that currently, the Buffer Size field indicates an index (index) instead of an absolute value of a data amount, but the index corresponds to a data amount range. A relationship between the index indicated by the Buffer Size field and the corresponding data amount range is indicated by using a predefined buffer status table (Buffer Status table, BS table) (briefly referred to as a BS table below). That is, the Buffer Size field indicates a range of the data amount on the LCG in a manner of indicating an index, and a receiving end (for example, a base station) may determine the corresponding data amount range based on the index indicated by the Buffer Size field and the predefined BS table.

Currently, two BS tables are defined in a protocol, corresponding to a 5-bit Buffer Size field and an 8-bit Buffer Size field respectively. A value of the 8-bit Buffer Size field may be converted into a decimal value ranging from 0 to 255. In the BS table corresponding to the 8-bit Buffer Size field, the decimal value ranging from 0 to 255 is used as an index (index) and each corresponds to a different data amount range. A value of the 5-bit Buffer Size field may be converted into a decimal value ranging from 0 to 31. In the BS table corresponding to the 5-bit Buffer Size field, the decimal value ranging from 0 to 31 is used as an index and each corresponds to a different data amount range.

For example, Table 1 is a BS table corresponding to an 8-bit Buffer Size field. A unit of a buffered data amount in Table 1 may be byte.

Table 1

| Index (index) | Buffered data amount (BS value) | Index | BS value | Index | BS value | Index | BS value |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | ≤ 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |

(continued)

| Index (index) | Buffered data amount (BS value) | Index | BS value | Index | BS value | Index | BS value |
|---|---|---|---|---|---|---|---|
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | 155 | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | ≤ 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | Reserved |

For example, an index indicated by the Buffer Size field is 41. In Table 1, BS value corresponding to the index 41 ≤ 132, and BS value corresponding to the index 40 is ≤ 124. Therefore, the value of the Buffer Size field is "00101001", that is, when the indicated index is 41 (a decimal value converted from "00101001"), a data amount indicated by the Buffer Size field is greater than 124 and does not exceed 132 (which is less than or equal to 132, and the following similar descriptions follow the same principle).

Currently, the long BSR is applicable to a scenario in which at least two LCGs have to-be-transmitted data. When the terminal device reports the BSR, if there is only one LCG having to-be-transmitted data, the long BSR causes extra overheads. In this case, a short BSR may be used for reporting.

FIG. 2 shows a method for reporting a short BSR in a current standard. In the BSR, an LCG ID field includes three bits, indicating an LCG whose data amount is reported by the BSR MAC, and a Buffer Size field includes five bits, indicating a data amount reported by the LCG.

2. Delay status report (delay status report, DSR)

It can be learned from the foregoing descriptions that in a conventional BSR reporting method, only a data amount is reported. However, some delay-sensitive services, for example, an XR service, have a strict requirement on an air interface transmission delay. For example, an uplink transmission delay budget of an XR frame is usually 30 ms. It may be understood that calculation starts from a part that is of an XR frame and that first arrives at the terminal device, and all parts of the XR frame need to be successfully received by the base station or a user plane network element within 30 ms. Otherwise, transmission of the XR frame may be invalid. Therefore, because the base station cannot learn of the delay information of the data based on a conventional BSR, a resource scheduled by the base station may not be able to complete transmission of the data within required air interface time. This not only wastes air interface transmission resources, but also affects user experience.

To resolve the foregoing problem, currently, a solution is provided: A terminal device may report a report including delay information of to-be-transmitted data, and the report carrying the delay information of the to-be-transmitted data may be referred to as a DSR. It should be noted that the DSR is only an example name currently provided temporarily, and the report carrying the delay information of the to-be transmitted data may also have another name.

Optionally, the DSR may also indicate a data amount of the to-be-transmitted data. It may be understood that, if the DSR may indicate both the data amount of the to-be-transmitted data and the delay information of the to-be-transmitted data, the DSR may also be understood as a BSR whose new function is extended based on an original function.

However, a specific manner of reporting the to-be-transmitted data by using the DSR is not determined. It is assumed that similar to the BSR MAC CE, the DSR is also a MAC CE, and may be referred to as a DSR MAC CE. The following separately describes several possible manners of reporting the delay information of the to-be-transmitted data by using the DSR MAC CE.

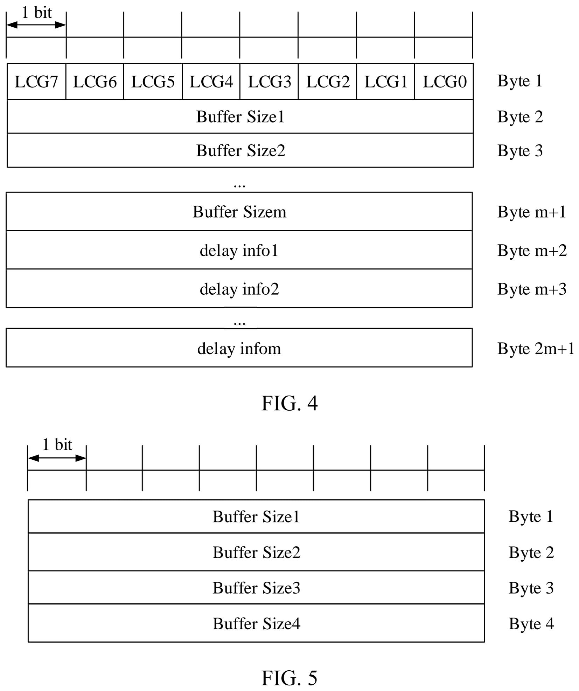

Manner 1: Report the delay information (or the delay information and a data amount. An example in which the delay information and the data amount are reported is used below for description) at a granularity of an LCG/LCH. FIG. 3 and FIG. 4 provide two formats of a DSR MAC CE at an LCG granularity. Each of the LCG0 field to the LCG7 field in the DSR MAC CE has a size of 1 bit, and indicates whether the MAC CE includes the delay information and the data amount of the corresponding LCG. Only when it indicates that the MAC CE includes the delay information and the data amount of the corresponding LCG, the DSR MAC CE includes a field indicating the delay information corresponding to the LCG, for example, a delay information (delay information, delay info) field in FIG. 3 and FIG. 4, and a field (for example, a Buffer Size field in FIG. 3 and FIG. 4) indicating the data amount corresponding to the LCG. Refer to FIG. 3 and FIG. 4. In the DSR MAC CE, a common size of the LCG0 field to the LCG7 field is 1 byte, which may be referred to as a byte 1.

In a possible implementation, when a value of an LCGi field corresponding to LCGi is 1, it means that a data amount and delay information that correspond to LCGi are reported by using the DSR MAC CE, that is, a Buffer Size field and a delay info field that correspond to LCGi appear in the MAC CE. When a value of an LCGi field is 0, it means that a data amount and delay information that correspond to LCGi are not reported in the MAC CE, that is, a Buffer Size field and a delay info field that correspond to LCGi do not appear in the MAC CE. For example, when a value of LCG0 is 1, a Buffer Size field and a delay info field that correspond to LCG0 appear in the MAC CE. When a value of LCG0 is 0, a Buffer Size field and a delay info field that correspond to LCG0 do not appear in the MAC CE.

Therefore, in the DSR MAC CE, a quantity of Buffer Size fields and a quantity of delay info fields are determined based on a quantity of fields in the LCG0 field to the LCG7 field that indicate that the DSR MAC CE includes delay information and a data amount of a corresponding LCG. Refer to FIG. 3 and FIG. 4. When any m LCG fields in the DSR MAC CE indicate that the DSR MAC CE includes delay information and a data amount of a corresponding LCG, the DSR MAC CE further includes m corresponding Buffer Size fields: a Buffer Size1 field, a Buffer Size2 field, ..., and a Buffer Sizem field, and m corresponding delay info fields: a delay info1 field, a delay info2 field, ..., and a delay infom field. For example, if sizes of the Buffer Size field and the delay info field are 1 byte, as shown in FIG. 3 and FIG. 4, the BSR MAC CE includes a byte 1, a byte 2, a byte 3, ..., a byte 2m, and a byte 2m+1, and a size of the BSR MAC CE is 2m+1 octal characters.

As shown in FIG. 3, in one MAC CE, a Buffer Size field and a delay info field that correspond to a same LCG may be adjacent fields. Alternatively, as shown in FIG. 4, a Buffer Size field in one MAC CE may not be adjacent to a corresponding delay info field. Buffer Size fields of an LCG are adjacent to each other, and delay info fields of the LCG are adjacent to each other.

It should be noted that a sequence of the delay info field and the Buffer Size field shown in FIG. 3 and FIG. 4 is merely an example sequence, and the sequence of the delay info field and the Buffer Size field may also be in another form.

In Manner 1, the Buffer Size field indicates data amounts of all to-be-transmitted data corresponding to the LCG. However, in this indication manner, there may be a problem that the indicated delay information and the indicated data amount are improper, or overheads are high.

For example, it is assumed that a plurality of pieces of data need to be reported in LCGi, and each piece of data corresponds to different delay information. However, because reporting is performed at a granularity of an LCG in Manner 1, if a quantity of fields indicating delay information in the DSR MAC CE is limited, for example, one LCG in the DSR MAC CE is set to correspond to one field indicating delay information, a field indicating delay information corresponding to LCGi can indicate only delay information corresponding to one piece of data in LCGi (for example, indicate delay information of data that first arrives at the terminal device in LCGi). In this case, the base station cannot determine delay information of each piece of data in LCGi based on the DSR MAC CE. Therefore, the base station cannot implement proper scheduling. In addition, because the data amount is also reported at a granularity of an LCG, a field indicating the data amount corresponding to LCGi may indicate a data amount of all or some data in LCGi. In other words, the reported data amount may not match the indicated delay information, and the reported data amount is not a data amount of data actually corresponding to the indicated delay information. For example, it is assumed that in the DSR MAC CE, a delay info field corresponding to LCGi indicates delay information of data 1 in LCGi, and a Buffer Size field corresponding to LCGi indicates a data amount of all data in LCGi. Therefore, the base station receives Buffer Size and delay info that do not match each other, and cannot implement proper scheduling.

However, if delay information of each piece of data needs to be reported, a field indicating delay information in the DSR MAC CE needs to be additionally added. For example, if delay information corresponding to three pieces of data in LCGi needs to be reported, three delay info fields need to be added to LCGi. This greatly increases overheads of the DSR MAC CE.

Manner 2: Report the data amount at a granularity of delay information. For example, in this manner, the DSR MAC CE may not explicitly indicate the delay information of the data, but implicitly indicate the delay information by using a field (or a location of the field), and determine the data amount of the corresponding data by using a value in the field.

In an example shown in FIG. 5, one DSR MAC CE includes four fields: Buffer Size1 to Buffer Size4. Each field implicitly indicates one piece of delay information, and a value corresponding to the field indicates a data amount corresponding to the delay information. For example, the delay information is storage duration of the data (which is duration in which the data has been stored on the terminal device since the data arrives at the terminal device). In a MAC CE shown in FIG. 5, a 1st field (Buffer Size1) indicates a data amount corresponding to data whose storage duration is less than 5 ms, a 2nd field (Buffer Size2) indicates a data amount corresponding to data whose storage duration is greater than or equal to 5 ms and less than 10 ms, a 3rd field (Buffer Size3) indicates a data amount corresponding to data whose storage duration is greater than or equal to 10 ms and less than 15 ms, and a 4th field (Buffer Size4) indicates a data amount corresponding to data whose storage duration is greater than or equal to 15 ms. It can be learned that, in the DSR MAC CE, the delay information of the data is not explicitly indicated by using the delay info field in Manner 1, but is implicitly indicated by using a location of the Buffer Size field.

However, in Manner 2, a format size of the DSR MAC CE is fixed, and unnecessary bit overheads may be caused. For example, when the terminal device reports a DSR, the terminal device may have only data whose remaining transmission delay is less than 5 ms and needs to report a data amount. In this case, for the DSR MAC CE, only one field is actually required to report the data amount, or only one field includes valid information (or is referred to as only one field being valid), but the DSR MAC CE still includes another field (or is referred to as another invalid field) without valid information. Therefore, unnecessary resources are wasted.

In conclusion, there are still some improper aspects in the currently proposed manner of reporting the delay information of the to-be-transmitted data based on the DSR. Based on this, an embodiment of this application designs a proper information reporting method, to report related delay information of to-be-transmitted data, so that a base station can properly schedule a resource based on the delay information of the to-be-transmitted data.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c. Herein, a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a relative concept in a specific manner for ease of understanding.

In embodiments of this application, "indication" may include a direct indication and an indirect indication, or may include an explicit indication and an implicit indication. Information indicated by a piece of information (for example, the following first indication information or second indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device.

In embodiments of this application, "predefined" or "preconfigured" may be implemented by pre-storing corresponding code, a table, or another manner that may indicate related information in the device. For example, the code, the table, or the another manner may be burnt into the device before delivery. A specific implementation of the code, the table, or the another manner is not limited in embodiments of this application. "Stored" may be "stored in one or more memories". The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and do not limit time, and the device is not required to perform a determining action during implementation. This does not mean that there is another limitation.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) mobile communication system and an evolved system of 5G, a vehicle-to-everything (vehicle-to-everything, V2X) system, an LTE and NR hybrid networking system, a device-to-device (device-to-device, D2D) system, a machine-to-machine (machine-to-machine, M2M) communication system, the internet of things (internet of things, IoT), another next-generation communication system, and the like.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

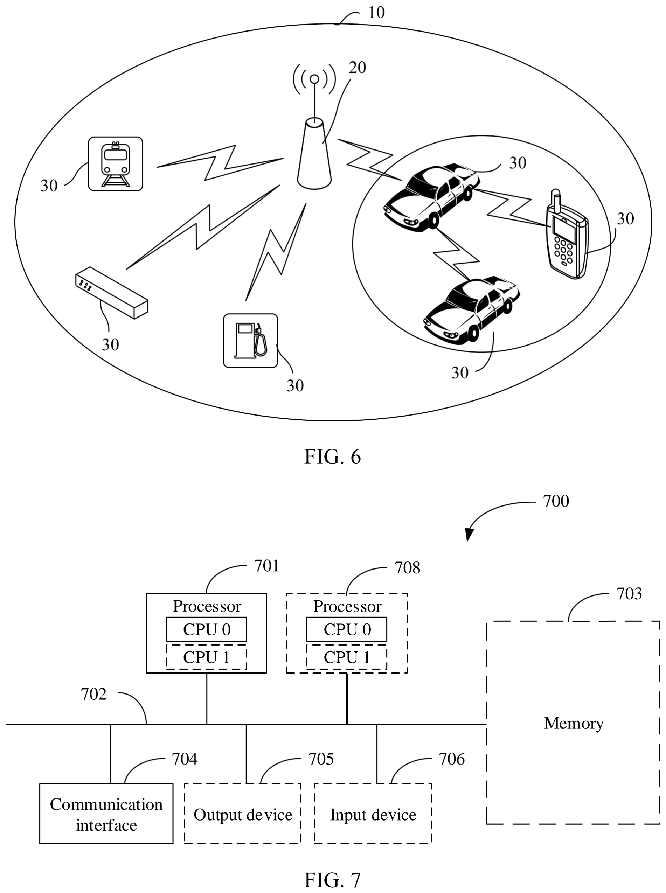

FIG. 6 is a possible and non-limiting diagram of a system according to an embodiment of this application. As shown in FIG. 6, the communication system 10 includes a second device 20 and a first device 30. The second device 20 may communicate with the first device 30 in a wireless manner.

It may be understood that FIG. 6 is merely a diagram, and does not constitute a limitation on a quantity of second devices 20 or first devices 30 in the communication system 10. The communication system 10 may include at least one second device 20 and at least one first device 30.

Optionally, different second devices 20 may communicate with each other. Optionally, different first devices 30 may communicate with each other. The second device 20 and/or the first device 30 may be at a fixed location, or may be movable.

For example, the second device 20 shown in FIG. 6 interacts with any first device 30. In the information reporting method provided in this embodiment of this application, the first device 30 sends first information to the second device 20, where the first information includes a first field, and the first field indicates first delay information and whether the first information includes a first data amount. When the first field indicates that the first information includes the first data amount, the first information further includes a second field, the second field indicates the first data amount, the first data amount is a data amount of first data, and the first delay information is delay information of the first data, where the first field is different from the second field. Specific implementations and technical effects of the solution are described in detail in subsequent method embodiments. Details are not described herein.

Optionally, the second device 20 and the first device 30 in this embodiment of this application may be deployed on land, including indoor, outdoor, handheld, or vehicle-mounted devices; may be deployed on the water; or may be deployed on airplanes, balloons and satellites in the air. Application scenarios of the second device 20 and the first device 30 are not limited in this embodiment of this application.

Optionally, in this embodiment of this application, the second device 20 and the first device 30 may communicate with each other on a licensed spectrum, or may communicate with each other on an unlicensed spectrum (which may also be referred to as an unlicensed spectrum), or may communicate with each other on both the licensed spectrum and the unlicensed spectrum. The second device 20 and the first device 30 may communicate with each other on a spectrum below 6 gigahertz (gigahertz, GHz), may communicate with each other on a spectrum above 6 GHz, or may communicate with each other on both the spectrum below 6 GHz and the spectrum above 6 GHz. A spectrum resource used between the second device 20 and the first device 30 is not limited in this embodiment of this application.

Optionally, the second device 20 in this embodiment of this application may be a network device. The first device 30 may be a terminal device.

Optionally, the network device in embodiments of this application is a device that connects the terminal device and a wireless network. The network device in embodiments of this application may include various forms of base stations (base station), for example, may be a macro base station, a micro base station (also referred to as a small cell), a relay station, an access point, a transmission point (transmission point, TP), an evolved NodeB (evolved NodeB, eNB), a transmission reception point (transmission reception point, TRP), a next-generation NodeB (next-generation NodeB, gNB) in a 5G mobile communication system, a device that implements a base station function in an evolved communication system after 5G, a mobile switching center, a device that bears a base station function in device-to-device (Device-to-Device, D2D), vehicle-to-everything (vehicle-to-everything, V2X), machine-to-machine (machine-to-machine, M2M) communication, or the like; or may be a network device in a non-terrestrial network (non-terrestrial network, NTN) communication system, that is, may be deployed on a high-altitude platform or a satellite; or may be a module or a unit that completes some functions of a base station, for example, may be a central unit (central unit, CU) or a distributed unit (distributed unit, DU) in a cloud access network (cloud radio access network, C-RAN) system. A specific technology and a specific device form that are used by the network device are not limited in embodiments of this application. All or some functions of the network device may alternatively be implemented by using a software function running on hardware, or may be implemented by using a virtualization function instantiated on a platform (for example, a cloud platform). In this application, unless otherwise specified, the network device is a radio access network (radio access network, RAN) device.

Optionally, a terminal device in embodiments of this application may be a device having a wireless transceiver function, or may be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer having a wireless transceiver function, a wireless local loop (wireless local loop, WLL) station, a personal digital assistant (personal digital assistant, PDA), a handheld device having a wireless communication function, a computing device or another processing device connected to a wireless modem, a vehicle-mounted device, a communication device carried on a high-altitude aircraft, a wearable device, an uncrewed aerial vehicle, a robot, a smart point of sale (point of sale, POS) machine, a device in machine-type communication, a terminal device in D2D, a vehicle-mounted terminal device in V2X, an on-board unit (on-board unit, OBU), a vehicle-mounted communication terminal (telematics box, T-box), a vehicle or road side unit (road side unit, RSU), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used for the terminal device are not limited in embodiments of this application. For example, the terminal device may alternatively be a chip or a module. All or some functions of the terminal device may alternatively be implemented by using a software function running on hardware, or may be implemented by using a virtualization function instantiated on a platform (for example, a cloud platform).

Optionally, the first device 30 or the second device 20 may use a structure of a communication apparatus 700 shown in FIG. 7. As shown in FIG. 7, the communication apparatus 700 includes a processor 701, a communication line 702, and at least one communication interface (in FIG. 7, only an example in which the communication interface 704 is included is used for description). Optionally, the communication apparatus 700 may further include a memory 703.

The processor 701 may be a general-purpose central processing unit (central processing unit, CPU), a microprocessor, an application-specific integrated circuit (application-specific integrated circuit, ASIC), or one or more integrated circuits configured to control program execution of the solution in this application.

The communication line 702 may include a path, to transfer information between the foregoing components.

The communication interface 704 is any apparatus such as a transceiver to communicate with another device or communication network, such as Ethernet, a radio access network (radio access network, RAN), or a wireless local area network (wireless local area network, WLAN).

The memory 703 may be a read-only memory (read-only memory, ROM) or another type of static storage device that can store static information and an instruction, a random access memory (random access memory, RAM) or another type of dynamic storage device that can store information and an instruction, an electrically erasable programmable read-only memory (electrically erasable programmable read-only memory, EEPROM), a compact disc read-only memory (compact disc read-only memory, CD-ROM) or another optical disc storage, optical disk storage (including compressed optical discs, laser discs, optical discs, digital versatile optical discs, Blu-ray discs, and the like), magnetic disk storage medium or another magnetic storage device, or any other medium that can be used to carry or store desired program code in the form of instructions or data structures and can be accessed by a computer, but not limited thereto. The memory may exist independently, and is connected to the processor through the communication line 702. The memory may alternatively be integrated with the processor.

The memory 703 is configured to store computer-executable instructions for performing the solutions of this application, and the processor 701 controls execution. The processor 701 is configured to execute the computer-executable instructions stored in the memory 703, to implement the method provided in the following embodiments of this application.

Optionally, the computer-executable instructions in embodiments of this application may also be referred to as application program code or computer program code. This is not specifically limited in embodiments of this application.

In a specific implementation, in an embodiment, the processor 701 may include one or more CPUs such as a CPU 0 and a CPU 1 in FIG. 7.

In a specific implementation, in an embodiment, the communication apparatus 700 may include a plurality of processors, for example, a processor 701 and a processor 708 in FIG. 7. Each of the processors may be a single-core (single-CPU) processor or a multi-core (multi-CPU) processor. The processor herein may be one or more devices, circuits, and/or processing cores configured to process data (for example, computer program instructions).

In a specific implementation, in an embodiment, the communication apparatus 700 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 communicates with the processor 701, and may receive an input from a user in a plurality of manners. For example, the input device 706 may be a mouse, a keyboard, a touchscreen device, a sensing device, or the like.

It may be understood that the structure shown in FIG. 7 does not constitute a specific limitation on the communication apparatus 700. In some other embodiments of this application, the communication apparatus 700 may include more or fewer components than those shown in the figure, or combine some components, or split some components, or have different component arrangements. The components shown in the figure may be implemented by hardware, software, or a combination of software and hardware.

With reference to FIG. 6 and FIG. 7, the following describes in detail the information reporting method according to embodiments of this application by using an example in which the second device 20 shown in FIG. 6 interacts with any first device 30.

It should be noted that names of messages between network elements, names of parameters in the messages, or the like in the following embodiments of this application are merely examples, and there may be other names in a specific implementation. This is not specifically limited in embodiments of this application.

It should be noted that a granularity, a size, or a unit of data in the following embodiments of this application is not limited. The data may be a data unit, or may include a plurality of data units. For example, data in the following embodiments of this application may be a service data unit (service data unit, SDU), a protocol data unit (protocol data unit, PDU), a protocol data unit set (PDU set), or a data burst (data burst). The PDU includes an SDU and a header of a corresponding layer. For example, a packet data convergence protocol (packet data convergence protocol, PDCP) PDU is obtained when a PDCP layer adds a PDCP header to a PDCP SDU. The PDU set includes at least one PDU, and the PDU carries an information unit generated by an application (or an application layer). For example, a video frame has a large data amount, and usually needs to be divided into a plurality of PDUs for transmission. The plurality of PDUs may form one PDU set. A data burst may be understood as a set of PDUs generated and sent by an application (or an application layer) in a short time, and these PDUs may come from one or more PDU sets.

It should be noted that a field in the following embodiments of this application may also be replaced with a field. For example, the first field may also be replaced with a first field, and this does not affect the solutions in the following embodiments of this application.

It should be noted that a unit of duration such as valid transmission duration, storage duration, or a remaining transmission delay budget in the following embodiments of this application may be a time unit such as second or millisecond, or may be a communication time unit such as a slot, a subframe, or a system frame, or may be a combination of the two units. This is not limited in embodiments of this application.

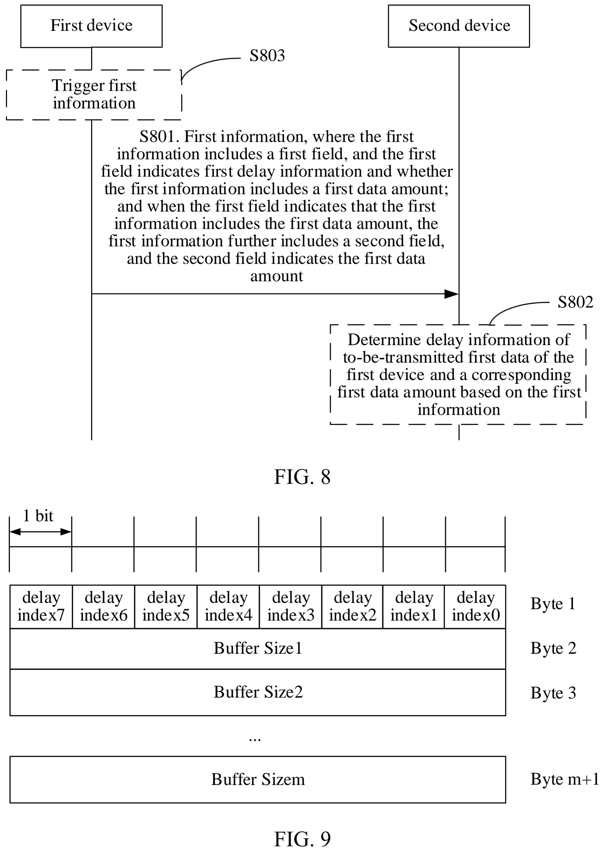

FIG. 8 shows an information reporting method according to an embodiment of this application. In FIG. 8, an example in which a first device and a second device are used as execution bodies for interaction is used to illustrate the method. However, the execution bodies for the interaction are not limited in this application. For example, the first device in FIG. 8 may also be a module, for example, a chip, a chip system, or a processor, used in the first device, or may be a logical node, a logical module, or software that can implement all or some functions of the first device node. The second device in FIG. 8 may also be a module, for example, a chip, a chip system, or a processor, used in the second device, or may be a logical node, a logical module, or software that can implement all or some functions of the second device. The information reporting method includes the following steps:

S801: The first device sends first information, and correspondingly, the second device receives the first information.

The first information includes a first field, and the first field indicates first delay information and whether the first information includes a first data amount.

The first data amount is a data amount of first data. The first data is data that is in to-be-transmitted uplink data of the first device and that corresponds to first delay information (or referred to as matching the first delay information). In other words, the first delay information is delay information of the first data.

When the first field indicates that the first information includes the first data amount, the first information further includes a second field. The second field is a field different from the first field. The second field may indicate the first data amount. When the first field indicates that the first information does not include the first data amount, the first information does not include a second field.

That is, the first device may flexibly indicate, by using the first field, whether the first information includes the first data amount, and may further indicate whether the first information includes the second field indicating the data amount. When the first data amount needs to be reported (that is, the first information needs to include the first data amount), both the second field and the first field are included in the first information. The first device may notify, by using the first field, the second device that the first information includes the first data amount and the second field indicating the first data amount. The second device may learn of the first data amount based on the second field under an indication of the first field. When the first data amount does not need to be reported (that is, the first information does not need to include the first data amount), the second field is not included in the first information, thereby reducing resource overheads.

For example, the first information may be referred to as a DSR, or may have another name. This is not limited in this embodiment of this application.

For example, the first information may be a MAC CE (or briefly referred to as a DSR MAC CE). Alternatively, the first information may be user assistance information (UE assistance information, UAI). Alternatively, the first information may be uplink control information (uplink control information, UCI), or the first information may be carried in other information or signaling. A carrying manner of the first information is not limited in this embodiment of this application.

Optionally, after triggering the first information (S803 in FIG. 8), the first device may generate the first information and send the first information. In other words, in this embodiment of this application, triggering the first information and sending the first information may be two different steps, and a moment at which the first information is triggered and a moment at which the first information is sent may be different moments. A specific implementation of triggering the first information is described below. Details are not described herein. The following describes in detail that the first field indicates the first delay information and whether the first information includes the first data amount.

For the first field indicating the first delay information, in a possible implementation, there may be a mapping relationship between the first field and the first delay information. The mapping relationship may be pre-agreed on by the first device and the second device, or may be preconfigured in the first device and the second device, for example, may be burned by the first device and the second device before delivery, or may be predefined in a protocol, or may be determined in a manner such as a dynamic indication. That is, the first device and the second device may learn in advance that the first field corresponds to the first delay information, so that the second device can determine the first delay information based on the first field in the first information. For example, the first device and the second device may agree in advance that first delay information indicated by a 1st first field in the first information is a time interval less than or equal to 5 ms, and first delay information indicated by a 2nd first field in the first information is a time interval less than or equal to 10 ms.

For the first field indicating whether the first information includes the first data amount, in a possible implementation, there may be a mapping relationship between different values of the first field and whether the first information includes the first data amount. The mapping relationship may be pre-agreed on by the first device and the second device, or may be preconfigured in the first device and the second device, or may be predefined in a protocol, or may be determined in a manner such as a dynamic indication. In other words, the first device and the second device may learn in advance which values of the first field may indicate the first data amount in the first information, and which values may indicate that the first information does not include the first data amount. Therefore, the second device may determine, based on different values of the first field in the first information, whether the first information includes the first data amount. For example, assuming that a size of the first field is 1 bit, the first device and the second device may agree in advance that when a value of the first field is 1, it indicates that the first information includes the first data amount; or when a value of the first field is 0, it indicates that the first information does not include the first data amount.

For the second field indicating the first data amount, in a possible implementation, the second field may include a first index, and the first index indicates the first data amount. After receiving the first information including the second field, the second device may determine the corresponding first data amount based on the first index included in the second field.

Optionally, the first index included in the second field may be obtained by converting a value of the second field into a numeral system. For example, the value of the second field may be converted into a decimal value, and the converted decimal value is the first index.

Optionally, the first data amount indicated by the first index may be an absolute value, or may be a data amount range. For example, the first index may indicate an absolute value 80, or may indicate a range not greater than 80.

Optionally, a size of the second field may be related to a range of indexes that can be indicated by the second field. For example, if the second field is a bits, the second field may indicate a maximum of $2^a$ data amounts, and a value range of the index of the second field may be $[0, 2^a-1]$.

For example, the correspondence between the first index and the first data amount may be represented in a form of a list. The list may be referred to as a first status report list (or may have another name. This is not specifically limited in this embodiment of this application).

It should be noted that the correspondence between the first index and the first data amount may not be represented in a form of a list. In the following embodiments, an example in which the correspondence between the first index and the first data amount is included in the first status report list is used for description. A representation form of the correspondence between the first index and the first data amount is not limited in this embodiment of this application.

Optionally, in addition to the correspondence between the first index and the first data amount, the first status report may further include another correspondence between an index and a data amount. In other words, the first status report list may include N indexes and N data amounts, the N indexes respectively correspond to the N data amounts, the first index is one of the N indexes, the first data amount is one of the N data amounts, and N is a positive integer.

For example, for a form of the first status report list, refer to the form of the BS table described above. Certainly, the first status report list may also be another table including a correspondence between a data amount and an index. This is not limited in this embodiment of this application.

For example, a unit of the first data amount indicated by the second field may be byte.

For example, it is assumed that the first status report list includes 256 indexes (values of the indexes are 0 to 255). For a correspondence between an index and a data amount, refer to Table 1. When the value of the second field is "01000110", it indicates that the value of the first index indicated by the second field is 70. In this case, it may be learned, based on the correspondence included in the first status report list, that the second field indicates that the first data amount is greater than 767 bytes and does not exceed 817 bytes. When the value of the second field is "00000001", it indicates that the value of the first index indicated by the second field is 1, it may be learned, based on the correspondence included in the first status report list, that the second field indicates that the first data amount does not exceed 10 bytes.

It may be understood that if the correspondence between the first index and the first data amount is included in the first status report list, to determine the first data amount based on the first index, both the first device and the second device need to obtain the first status report list. Optionally, the first status report list may be preconfigured in the first device and the second device, for example, configured by the first device or the second device before delivery, or may be configured by the second device for the first device, for example, may be configured by using an RRC message, or may be predefined in a protocol, or may be pre-agreed on by the first device and the second device.

For the first delay information, the first delay information may indicate information related to a transmission delay of the to-be-transmitted data. For example, the first delay information may indicate a remaining transmission delay budget, or may indicate storage duration. Specific definitions of the remaining transmission delay budget and the storage duration are described in detail below, and are not described herein.

Optionally, the first delay information may indicate the information related to the transmission delay in a plurality of manners. For example, the first delay information may include a time interval or a time point. When the first delay information includes the time interval, if the time interval indicates the remaining transmission delay budget/storage duration, to-be-transmitted data whose remaining transmission delay budget/storage duration is in the time interval is the first data, or the time interval includes the remaining transmission delay budget/storage duration of the first data. When the first delay information includes the time point, the first data is to-be-transmitted data whose corresponding remaining transmission delay budget/storage duration is the same as or approximate to a value of the time point included in the first delay information. In particular, for a 1st piece of first delay information in the first information, the first data is to-be-transmitted data whose corresponding transmission delay budget/storage duration does not exceed a time point included in the first delay information.

For example, assuming that the first delay information includes a time interval, a time interval included in a piece of first delay information in the first information is [15, 20), and a unit is ms. If the time interval indicates a remaining transmission delay budget, the first data is to-be-transmitted data whose remaining transmission delay budget is greater than or equal to 15 ms and less than 20 ms.

For another example, assuming that the first delay information includes a time interval, a time interval included in a 1st piece of first delay information in the first information may be x less than or equal to 5 ms, where x represents a remaining transmission delay budget/storage duration of the to-be-transmitted data, a time interval included in a 2nd piece of first delay information may be x less than or equal to 10 ms, a time interval included in a 3rd piece of first delay information may be x less than or equal to 15 ms, ..., and a time interval included in a last piece of first delay information may be x greater than 35 ms. In this example, for a time interval corresponding to the to-be-transmitted data, refer to the foregoing description of a data amount range indicated by the Buffer Size field in the BS table. For example, if a remaining transmission delay budget/storage duration of to-be-transmitted data is 8 ms less than 10 ms and greater than 5 ms, the data corresponds to the 2nd piece of first delay information. If a remaining transmission delay budget/storage duration of to-be-transmitted data is 12 ms less than 15 ms and greater than 10 ms, the data corresponds to the 3rd piece of first delay information.

For another example, assuming that the first delay information includes a time point, a time point included in a 1st piece of first delay information in the first information may be 5 ms, and a time point included in a 2nd piece of delay information may be 6 ms. Assuming that the time point indicates the remaining transmission delay budget, the first device may determine, in a manner of rounding off a value of the remaining delay budget of the first data, the first delay information corresponding to the first data. For example, if the remaining delay budget of the first data is 5.4 ms and is rounded off to 5 ms, the first data corresponds to the 2nd piece of delay information. Alternatively, the first device may determine, in a manner of rounding up/down a value of the remaining delay budget of the first data, the first delay information corresponding to the first data. For example, if the remaining delay budget of the first data is 5.4 ms, and 5.4 ms is 6 ms during rounding up, the first data corresponds to the 2nd piece of delay information; or 5.4 ms is 5s during rounding down, the first data corresponds to the 1st piece of delay information.

Optionally, a value of the time interval/time point included in the first delay information may be preconfigured in the first device and the second device, or may be configured by the second device for the first device, for example, may be configured by using an RRC message, or may be predefined in a protocol, or may be pre-agreed on by the first device and the second device, or may be determined in a manner such as a dynamic indication.

It should be noted that a quantity and sizes of first fields in the first information is not limited in this embodiment of this application. For example, the quantity of first fields in the first information may be 8.

In this embodiment of this application, the first data amount reported based on the first information may be reported based on different granularities. The following provides detailed descriptions in different scenarios.

Scenario 1: The first data amount in the first information may be reported at a granularity of the first delay information. In other words, in Scenario 1, the first data amount reported based on the first information may not distinguish between LCHs/LCGs to which corresponding data belongs, and first data corresponding to one piece of first delay information may belong to one or more LCHs/LCGs.

For example, assuming that when the first device sends the first information, a 1st LCH/LCG and a 3rd LCH/LCG include data that meets a piece of first delay information, a first data amount corresponding to the first delay information includes a data amount of the data that meets the first delay information in the 1st LCH/LCG and a data amount of the data that meets the first delay information in the 3rd LCH/LCG, or a first data amount corresponding to the first delay information is a sum of a data amount of the data that meets the first delay information in the 1st LCH/LCG and a data amount of the data that meets the first delay information in the 3rd LCH/LCG.

For ease of understanding, with reference to an example, the following describes Scenario 1 in which the first information uses the first field to indicate the first delay information and whether the first data amount is included.

For example, it is assumed that the first information is a DSR MAC CE. FIG. 9 shows a format of a DSR MAC CE (a header is not shown in FIG. 9). In FIG. 9, the DSR MAC CE includes eight first fields (a delay index0 field to a delay index7 field in FIG. 9) to form a bitmap. A size of each first field is 1 bit, and a common size of the eight first fields is 1 byte, which may be referred to as a byte 1.

Each first field corresponds to one piece of first delay information, and a value of each first field indicates whether a data amount (that is, the first data amount) corresponding to data (that is, the first data) corresponding to the first delay information appears in the DSR MAC CE, that is, whether the DSR MAC CE includes the corresponding first data amount.

The first fields in the first information may be mapped to the first information, for example, the DSR MAC CE, in ascending order, for example, the delay index0 field to the delay index7 field, or in descending order, for example, the delay index7 field to the delay index0 field.

For example, the first delay information includes a time interval, and the time interval indicates a remaining transmission delay budget. Eight delay indexes in FIG. 9 may respectively correspond to eight different time intervals. For example, the remaining delay budget corresponding to the to-be-transmitted data is denoted as x, and time intervals respectively corresponding to delay index0 to delay index7 may be shown in Table 2.

Table 2

| Delay index | Time interval of x |
|-------------|--------------------|
| 0 | $x \le 5$ ms |
| 1 | $x \le 10$ ms |
| 2 | $x \le 15$ ms |
| 3 | $x \le 20$ ms |
| 4 | $x \le 25$ ms |
| 5 | $x \le 30$ ms |
| 6 | $x \le 35$ ms |
| 7 | $x > 35$ ms |

With reference to Table 2, delay index0 may indicate whether the DSR MAC CE includes a data amount of data whose remaining transmission delay budget is less than or equal to 5 ms, delay index1 may indicate whether the DSR MAC CE includes a data amount of data whose remaining transmission delay budget is greater than 5 ms and does not exceed 10 ms, delay index2 may indicate whether the DSR MAC CE includes a data amount of data whose remaining transmission delay budget is greater than 10 ms and does not exceed 15 ms, and deduction may be performed by analogy for other delay indexes. In addition, delay index7 may indicate whether the DSR MAC CE includes a data amount of data whose remaining transmission delay budget is greater than 35 ms.

The DSR MAC CE includes a corresponding second field (a Buffer Size field in FIG. 9) only when the first field indicates that the DSR MAC CE includes the data amount corresponding to the remaining transmission delay budget. For example, when delay index0 indicates that the DSR MAC CE includes a data amount of data whose remaining transmission delay budget is less than or equal to 5 ms, a Buffer Size field corresponding to delay index0 in the DSR MAC CE is, for example, a Buffer size1 field. The Buffer size1 field indicates a data amount of data whose remaining transmission delay budget is less than 5 ms.

As shown in FIG. 9, when m delay index fields indicate that the DSR MAC CE includes the data amount corresponding to the remaining transmission delay budget, the DSR MAC CE includes m Buffer Size fields: Buffer Size1 to Buffer Sizem. Assuming that a Buffer Size field includes 1 byte, the DSR MAC CE includes m+1 bytes: a byte 2, a byte 3, ..., and a byte m+1.

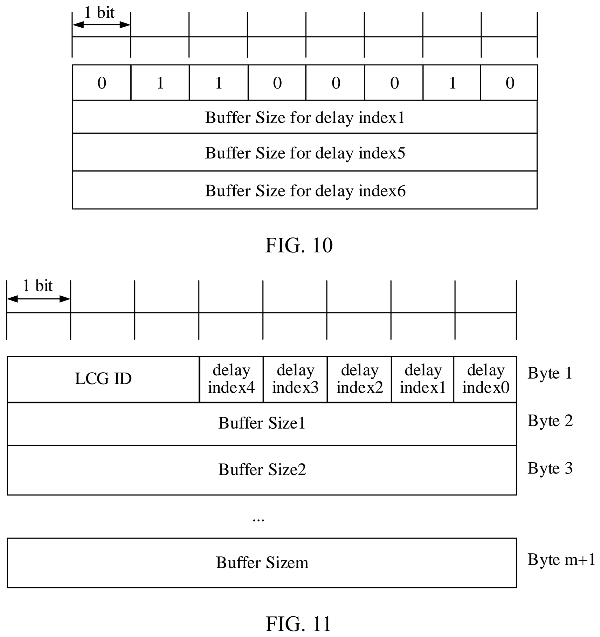

Further, with reference to FIG. 9 and Table 2, FIG. 10 shows a manner of indicating, by using a value of a delay index, whether the DSR MAC CE includes a corresponding first data amount. Specifically, when a value of delay index0 is 1, it may indicate that a data amount of data whose remaining transmission delay budget is less than 5 ms is included. When a value of delay index0 is 0, it indicates that a data amount of data whose remaining transmission delay budget is less than 5 ms is not included.

As shown in FIG. 10, values of delay index1, delay index5, and delay index6 are 1, and values of other delay indexes are 0. In this case, it indicates that the DSR MAC CE carries a data amount of data (which may be denoted as data 1) whose remaining transmission delay budget meets a time interval indicated by delay index1, a data amount of data (which may be denoted as data 2) whose remaining transmission delay budget meets a time interval indicated by delay index5, and a data amount of data (which may be denoted as data 3) whose remaining transmission delay budget meets a time interval indicated by delay index6. It should be understood that the data 1, the data 2, and the data 3 may be three different pieces of first data. In this case, in addition to a bitmap, the MAC CE further includes three second fields (namely, the three fields: Buffer Size for delay index1, Buffer Size for delay index5, and Buffer Size for delay index6 in FIG. 9), which respectively indicate a data amount matching delay index1 (namely, a data amount of the data 1), a data amount matching delay index5 (namely, a data amount of the data 2), and a data amount matching delay index6 (namely, a data amount of the data 3).

The second fields in the first information may be mapped to the first information, for example, the DSR MAC CE, in ascending order of the corresponding first fields, for example, a Buffer Size1 field (a Buffer Size field corresponding to a delay index0 field) to a Buffer Size7 field (a Buffer Size field corresponding to a delay index7 field), or in descending order of the corresponding first fields, for example, a Buffer Size7 field to a Buffer Size1 field.

It may be understood that the examples shown in FIG. 9 and FIG. 10 are also applicable to a scenario in which the first delay information indicates storage duration of the first data. In other words, the time interval in Table 2 may also indicate storage duration of the to-be-transmitted data.

Optionally, the structure of the DSR MAC CE shown in FIG. 10 may be understood as follows: A 1st field to an 8th field respectively indicate, in a sequence of delay information 0 to delay information 7 (or delay information 7 to delay information 0), whether to report a data amount, and the bitmap does not indicate that a data amount corresponding to the delay information for reporting the data amount is not transmitted in the MAC CE, thereby forming the structure shown in FIG. 10.

It should be noted that a quantity of first fields shown in FIG. 9 and the first delay information shown in Table 2 may also be other values. This is not limited in embodiments of this application. For example, a time interval corresponding to delay index0 in Table 2 may also be $x \leq 5$ ms, a time interval corresponding to delay index1 may also be $5 < x \leq 10$, a time interval corresponding to delay index2 may also be $10 < x \leq 15$, and time intervals corresponding to other delay indexes may be deduced by analogy.

In Scenario 1, in a possible case, the first data amount carried in the first information may be a data amount that is in all LCHs/LCGs of the first device and that meets corresponding first delay information.

Optionally, in this case, if the first delay information indicates a remaining transmission delay budget, and remaining transmission delay budgets of data radio bearers (data radio bearer, DRB) corresponding to some LCHs/LCGs cannot be obtained (no packet discard timer is configured), it may be considered that the remaining transmission delay budgets of the DRBs are infinite. For example, it may be considered that these DRBs meet the time interval corresponding to delay index7 in Table 2.

Alternatively, the first data amount carried in the first information may be a data amount that is in an LCH/LCG, that is configured for the first device and at which delay information needs to be reported, and that meets corresponding first delay information.

For example, it is assumed that the first data amount carried in the first information is from eight LCHs/LCGs. A possible case may be: All LCHs/LCGs configured for the first device are the eight LCHs/LCGs. Another possible case may be: The first device is configured with more than eight LCHs/LCGs, but only eight LCHs/LCGs are configured to need to report delay information. The first data amount carried in the first information is from the eight LCHs/LCGs configured to need to report the delay information.

Optionally, LCHs/LCGs of the first device that need to report the delay information may be configured by using a semi-static message, for example, an RRC message, preconfiguration, pre-definition in a protocol, or dynamic indication. Further, the delay information and the data amount carried in the first information may be related only to the LCHs/LCGs that are configured to need to report the delay information.

Further, in this case, for LCHs/LCGs that need to report the data amount (all LCHs/LCGs of the first device, or LCHs/LCGs that are configured to need to report the data amount), regardless of whether the first information is triggered (or whether a condition for triggering the first information is met), the data amount of the data may be carried in the first information for reporting.

For example, three LCHs/LCGs are configured for one first device, where a 1st LCH/LCG triggers first information. In this case, data amounts of all the three LCHs/LCGs may be reported in the first information.

Alternatively, three LCHs/LCGs are configured for one first device, where a 1st LCH/LCG and a 2nd LCH/LCG are configured to need to report delay information, and a 3rd LCH/LCG does not need to report delay information. In this case, if only some LCHs/LCGs, for example, the 1st LCH/LCG, trigger reporting of the first information, the first information may be used to report a data amount of data in the 1st LCH/LCG and the 2nd LCH/LCG, but does not report a data amount of data in the 3rd LCH/LCG. For example, the delay information is a remaining transmission delay budget. It is assumed that when the first information is sent, there is data whose remaining transmission delay budget is less than or equal to 5 ms on the 1st LCH/LCG, and there is data whose remaining transmission delay budget is greater than 15 ms and does not exceed 20 ms on the 2nd LCH/LCG. In this case, if the 1st LCH/LCG meets a condition for triggering the first information but the 2nd LCH/LCG does not meet the condition for triggering the first information, the first information may still report the data amount of the data that meets the corresponding first delay information and that is in the 1st LCH/LCG and the 2nd LCH/LCG, for example, indicate the data amount of the 2nd LCH/LCG in a second field corresponding to a time interval that is greater than 15 ms and does not exceed 20 ms, and indicate the data amount of the 1st LCH/LCG in a second field corresponding to a time interval less than or equal to 5 ms.

That the LCH/LCG meets the condition for triggering the first information may be understood as that the data in the LCH/LCG meets the condition for triggering the first information. How the data meets the condition for triggering the first information is described below. Details are not described herein.

In Scenario 1, in another possible case, the data amount carried in the first information may be a data amount of data of the LCH/LCG that triggers the first information (or that meets the condition for triggering the first information).

For example, one first device has eight LCHs/LCGs. When a 1st LCH/LCG in the first device triggers the first information, there is to-be-transmitted data on the 1st LCH/LCG and the 3rd LCH/LCG. When the first information is sent, because the first information is triggered by the 1st LCH/LCG, the first information may report only a data amount of data that meets the first delay information in the 1st LCH/LCG. In this case, if there is data that meets the first delay information on another LCH/LCG, the first information may not report a data amount of the data.

Further, in this case, after one or more LCHs/LCGs trigger the first information, if another LCH/LCG meets the condition for triggering the first information when the first information is sent, the first information may include only a data amount of data on the LCH/LCG that triggers the first information, or may include a data amount of data of another LCH/LCG that meets the condition for triggering the first information.

For example, at a first time point, only the 1st LCH/LCG meets the condition for triggering the first information, and the first information is triggered. When the first information is sent, the 3rd LCH/LCG also meets the condition for triggering the first information, and the first information may report a data amount of data in the 1st LCH/LCG and the 3rd LCH/LCG.

It should be noted that different cases of LCHs/LCGs from which the data amount carried in the first information comes may also be applied to a scenario in which data in one LCH/LCG from which the data amount carried in the first information comes is determined.

For example, assuming that when the first information is sent, data 1 in an LCH/LCG triggers the first information, but data 2 does not meet a condition for triggering the first information, the first information may indicate first delay information corresponding to the data 1, and report a data amount corresponding to the data 1, or may indicate first delay information corresponding to the data 2, and report a data amount corresponding to the data 2.

For another example, assuming that when the first information is sent, data 1 in an LCH/LCG triggers the first information, but data 2 does not meet a condition for triggering the first information, the first information may indicate only first delay information corresponding to the data 1, and report a data amount corresponding to the data 1, but does not indicate first delay information corresponding to the data 2, and does not report a data amount corresponding to the data 2.

For another example, assuming that when the first information is sent, data 1 in an LCH/LCG triggers the first information, and data 2 in another LCH/LCG does not meet a condition for triggering the first information, the first information may indicate only first delay information corresponding to the data 1, and report a data amount corresponding to the data 1, but does not indicate first delay information corresponding to the data 2, and does not report a data amount corresponding to the data 2. Alternatively, the first information may indicate first delay information respectively corresponding to the data 1 and the data 2, and report data amounts respectively corresponding to the data 1 and the data 2.

Scenario 2: The first data amount in the first information may be reported at a granularity of an LCH/LCG.

In Scenario 2, the first information may include information indicating an LCH/LCG to which the first data corresponding to the reported first data amount belongs. Optionally, the information may be a field (which may be referred to as a third field). Optionally, the third field and the first field may be adjacent or may not be adjacent.

In Scenario 2, the first data corresponding to each first data amount in the first information may be from a same LCH/LCG, or may be from a plurality of LCHs/LCGs.

Optionally, the LCH/LCG to which the first data amount in the first information belongs may be pre-obtained by the first device and the second device. For example, the LCH/LCG may be configured by the second device for the first device by using semi-static information such as an RRC message, or may be preconfigured in the first device and the second device. In this case, the first information may not explicitly indicate the LCH/LCG to which the first data amount in the first information belongs. Further, in this case, the first information may implicitly indicate the LCH/LCG to which the first data amount in the first information belongs. For example, an ID of the LCH/LCG may be implicitly indicated by using a logical channel identifier (logical channel identifier, LCID) (which may be carried in a header of the first information) corresponding to the first information. For example, the first device and the second device may learn of in advance a correspondence between a value of an LCID and an ID of an LCH/LCG, for example, may learn of an ID of an LCH/LCG (LCHs/LCGs) corresponding to the LCID when the LCID is a first value. Therefore, when the second device parses the LCID corresponding to the first information, for example, learns, through parsing by using the header corresponding to the first information, that the LCID is the first value, the second device may determine which LCH/LCG (or LCHs/LCGs) to which the data amount in the first information belongs.

Alternatively, the LCH/LCG to which the first data amount in the first information belongs may be explicitly indicated by the first information. In this case, the first information may include one or more third fields, to indicate an LCH/LCG to which each first data amount included in the first information belongs. For example, the first information may include eight third fields. If the first data corresponding to each first data amount in the first information is from a same LCH/LCG, the first information may include a third field, to indicate a same LCH/LCG to which each first data amount in the first information belongs. If the first data corresponding to each first data amount in the first information is from a plurality of LCHs/LCGs, the first information may include a plurality of third fields, and each third field indicates one LCH/LCG to which one or more first data amounts in the first information belong.

For ease of description, in the following descriptions of embodiments, the LCH/LCG indicated by the third field may be referred to as a first LCH/LCG.

For example, the third field may indicate an ID of the first LCH/LCG.

For ease of understanding, the following describes, with reference to an example, that the first information uses the first field to indicate the first delay information and whether the first data amount is included when the first information includes one third field.

For example, it is assumed that the first information is a DSR MAC CE. FIG. 11 is a diagram of a structure of first information including a third field. As shown in FIG. 11, an LCG is used as an example. The DSR MAC CE includes an LCG ID indication field (that is, a third field), used to indicate an LCG to which delay information and a data amount that are indicated by a DSR belong. For example, the LCG ID indication field may be 3 bits, and indicates LCG IDs whose indexes are 0 to 7. Certainly, a size of the third field is not limited in embodiments of this application. When there are more bits in the third field, more LCG IDs may be indicated. For example, when the LCG ID indication field is 4 bits, LCG IDs whose indexes are 0 to 15 may be indicated.

As shown in FIG. 11, the DSR MAC CE further includes five first fields (a delay index0 field to a delay index4 field) after the LCG ID indication field. A size of each first field is 1 bit, and each first field corresponds to one piece of first delay information. Refer to FIG. 11. When a size of the LCG indication field is 3 bits, a common size of the LCG indication field and the delay index0 field to the delay index4 field is 1 byte, which may be referred to as a byte 1.

For example, the first delay information includes a time interval, and the time interval indicates a remaining transmission delay budget. A remaining delay budget corresponding to to-be-transmitted data is denoted as x, and time intervals respectively corresponding to the delay inde0 field and the delay index4 field may be shown in Table 3.

Table 3

| Delay index | Time interval of x |
|---|---|
| 0 | x ≤ 5 ms |
| 1 | x ≤ 10 ms |
| 2 | x ≤ 15 ms |
| 3 | x ≤ 20 ms |
| 4 | x > 20 ms |

Still refer to FIG. 11. If m delay index fields indicate that the DSR MAC CE includes the first data amount, the DSR MAC CE includes m Buffer Size field values. Assuming that a size of the Buffer Size field is 1 byte, the DSR MAC CE includes m+1 bytes: a byte 1, a byte 2, ..., and a byte m+1. For details about how the delay index0 field to the delay index4 field specifically indicate whether the first data amount is reported and how Buffer Size1 to Buffer Sizem indicate the first data amount, refer to the foregoing descriptions of the examples shown in FIG. 9 and FIG. 10. The details are not described herein again.

Optionally, in Scenario 2, the first LCH/LCG indicated by the third field may be an LCH/LCG that triggers the first information.

Optionally, in Scenario 2, the third field may be at a granularity of the first information. For example, first information is reported at a granularity of an LCG. Both an LCG with LCG ID = 2 and an LCG with LCG ID = 3 trigger the first information. The first device may generate two pieces of first information, and all pieces of first information are distinguished by using an included LCG ID indication field (that is, the third field).

Optionally, in Scenario 2, the first data amount in an LCH/LCG included in the first information may be a data amount of all data that meets the first delay information in the LCH/LCG, or may be a data amount of data that triggers the first information (or meets a condition for triggering the first information) in the LCH/LCG. That is, if the data amount of the data in the first LCH/LCG indicated by the third field is referred to as a second data amount, the second data amount may be a data amount of all data that meets the first delay information in the first LCH/LCG, or may be a data amount that meets the condition for triggering the first information in the first LCH/LCG. Further, if the first information includes a plurality of second fields corresponding to the first LCH/LCG, the second data amount may be a sum of first data amounts indicated by the plurality of second fields.

For example, it is assumed that the first information is a DSR MAC CE shown in FIG. 11. An LCG with LCG ID = 3 includes three pieces of data: data 1, data 2, and data 3. When the first information is reported at a moment, the data 1 meets the condition for triggering the first information, and a remaining transmission delay of the data 1 is 8 ms; a remaining transmission delay of the data 3 is 25 ms; and the data 2 also meets the condition for triggering the first information, and a remaining transmission delay budget of the data 2 is 13 ms. In this case, in a possible case, in the DSR MAC CE, the LCG ID indication field indicates 3, for example, a value of a 3-bit LCG ID indication field is 011. Because only the data 1 and the data 2 meet the trigger condition during DSR reporting, bits corresponding to delay index1 and delay index2 are '1', and other bits in the bitmap are '0'. In this case, there are two Buffer Size fields in FIG. 11, which are respectively used to indicate data amounts corresponding to delay index1 and delay index2 (or delay index2 and delay index1), that is, data amounts of the data 1 and the data 2 (or the data 2 and the data 1). In another possible case, in the DSR MAC CE, the LCG ID indication field indicates 3, and data amounts of all three pieces of data are reported. Therefore, bits corresponding to delay index1, delay index2, and delay index4 are '1', and other bits in the bitmap are '0'. In this case, there are three Buffer Size fields in FIG. 11, which are respectively used to indicate data amounts corresponding to delay index1, delay index2, and delay index4 (or delay index4, delay index2, and delay index1), that is, data amounts of the data 1, the data 2, and the data 3 (or the data 3, the data 2, and the data 1).

Optionally, when the first information includes a plurality of third fields, one third field may correspond to at least one first field. In this case, the first information may be understood as a plurality of third fields, a first field corresponding to each third field, and a second field corresponding to the first field indicating that the first information includes the first data amount.

FIG. 11 and Table 3 are still used as an example. It is assumed that the sent first information includes both a data amount of data in an LCG with LCG ID = 2 and a data amount of data in an LCG with LCG ID = 3. A remaining transmission delay budget of the data in the LCG with LCG ID = 2 is 8 ms, and a remaining transmission delay budget of the data in the LCG with LCG ID = 3 is 12 ms. In this case, the first information may include an LCG indication field indicating that LCG ID = 2 (that is, a third field, referred to as an LCG indication field 1 below for ease of description) and five delay index fields corresponding to the LCG indication field 1. A value of the delay index1 field is 1, and values of the remaining four delay index fields are 0. In this case, the first information further includes a Buffer Size field corresponding to the LCG indication field 1, used to indicate a data amount of data corresponding to delay index 1. In addition, the first information further includes an LCG indication field indicating LCG ID = 3 (that is, another third field, referred to as an LCG indication field 2 below for ease of description) and five delay index fields corresponding to the LCG indication field 2. A value of the delay index2 field is 1, and values of the remaining four delay index fields are 0. In this case, the first information further includes a Buffer Size field corresponding to the LCG indication field 2, used to indicate a data amount of data corresponding to delay index2.

Optionally, when the first information includes data amounts of data in a plurality of LCHs/LCGs, the first information may first present information about one LCH/LCG (for example, information such as a third field, a first field, or a second field corresponding to the LCH/LCG), and then present information corresponding to another LCH/LCG. For example, a format of the first information may be a combination of formats of the plurality of DSR MAC CEs shown in FIG. 11. Alternatively, the first information may first present a plurality of third fields and a first field corresponding to each third field, and then present a second field corresponding to each third field. For example, in the first information, a third field indicating LCG ID = 2 and a corresponding first field may be first presented, a third field indicating LCG ID = 3 and a corresponding first field are presented, and then a second field corresponding to the third field indicating LCG ID = 2 and a second field corresponding to the third field indicating LCG ID = 3 are presented.

In the "first field corresponding to the LCH/LCG" and the following similar descriptions, the "corresponding first field" may be understood as: The first field indicates the first delay information, and further indicates whether the first information includes a data amount of data that corresponds to the first delay information and belongs to the LCH/LCG. In the "second field corresponding to the LCH/LCG" and the following similar descriptions, the "corresponding second field" may be understood as that data corresponding to a data amount indicated by the second field belongs to the LCH/LCG.

It should be noted that an appearance sequence of third fields in the first information is not limited in embodiments of this application. For example, it is assumed that the third fields indicate LCH/LCG IDs, and the third fields may appear in the first information in ascending or descending order of the indicated LCH/LCG IDs.

Further, when the first information includes data amounts of data of a plurality of LCHs/LCGs, after information about an LCH/LCG (for example, information such as a third field, a first field, or a second field corresponding to the LCH/LCG) appears, the first information may further include extension indication information, where the extension indication information indicates whether the first information further includes data amounts of data of other LCHs/LCGs to be reported. For example, it is assumed that the first information includes information about an LCG with LCG ID = 2 and information about an LCG with LCG ID = 3. After the first information presents the information about the LCG with LCG ID = 2, the first information may present extension indication information, where the extension indication information may indicate that the first information further includes data amounts of data in other LCHs/LCGs to be reported, and then the first information may present the information about the LCG with LCG ID = 3. According to this solution, a receiving end of the first information, such as the second device, may determine a size of the first information, to assist in successfully parsing the first information.

Optionally, in Scenario 2, the third field may further indicate whether the first information includes related information of the corresponding LCH/LCG (for example, information such as a corresponding first field or a corresponding second field). In other words, the first information includes the related information of the first LCH/LCG only when the third field indicates that the first information includes the related information of the corresponding first LCH/LCG; otherwise, the related information of the first LCH/LCG is not included.

The following uses an example in which the related information includes delay information and a data amount of data in the LCH/LCG for description. Specifically, when a third field in the first information indicates that the first information includes the related information of the corresponding first LCH/LCG, the first information further includes the first field corresponding to the first LCH/LCG; otherwise, the first information does not include the first field corresponding to the first LCH/LCG. Further, when the first field corresponding to the first LCH/LCG indicates that the first information includes the related information of the corresponding first LCH/LCG, the first information further includes the second field corresponding to the first LCH/LCG; otherwise, the first information does not include the second field corresponding to the first LCH/LCG.

For ease of understanding, the following describes, with reference to an example, that the first information uses the first field to indicate the first delay information and whether the first data amount is included when the first information includes a plurality of third fields and the third field may further indicate whether the first information includes the related information of the corresponding LCH/LCG.

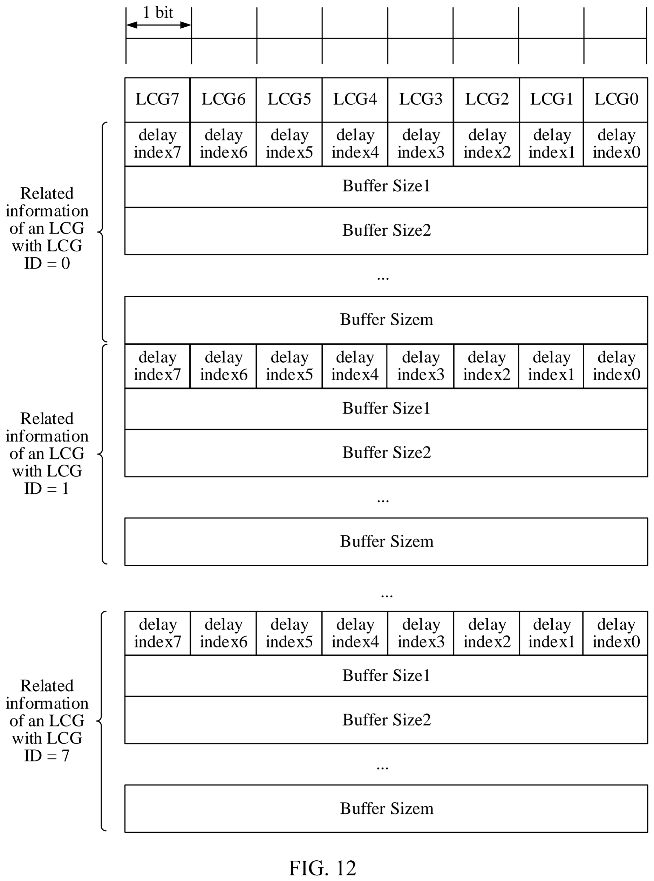

For example, it is assumed that the first information is a DSR MAC CE. FIG. 12 is a diagram of a structure of first information including eight third fields. As shown in FIG. 12, the DSR MAC CE includes eight third fields (for example, LCG0 to LCG7 in FIG. 12), and each third field indicates whether related information of a corresponding LCG appears in the DSR MAC CE. For example, when a value of a field corresponding to LCG0 in the DSR MAC CE is 1, it may indicate that the MAC CE includes related information about an LCG with LCG ID = 0, and when a value of a field corresponding to LCG0 is 0, it may indicate that the MAC CE does not include related information about an LCG with LCG ID = 0.

Further, in the example shown in FIG. 12, the information about the LCG that is included in the DSR MAC CE may include first delay information and a data amount that correspond to data in the LCG. If the third field indicates that the related information of the corresponding LCG appears in the DSR MAC CE, the DSR MAC CE includes a first field (for example, a delay index0 field to a delay index7 field in FIG. 12) corresponding to the LCG, and the first field indicates the first delay information and whether the DSR MAC CE includes a corresponding first data amount (the corresponding first data amount is a data amount of data corresponding to the first delay information in the data of the LCG). If the third field indicates that the related information of the corresponding LCG does not appear in the DSR MAC CE, the DSR MAC CE does not include the first field corresponding to the LCG, and does not include the second field corresponding to the LCG (for example, a Buffer Size1 field to a Buffer Sizem field in FIG. 12), that is, a data amount of the data in the LCG is not reported in the first information.

It may be understood that, in the example shown in FIG. 12, delay information indicated by a first field corresponding to an LCG and a data amount indicated by a second field corresponding to the LCG are specific to data in the corresponding LCG, and are irrelevant to data in another LCG.

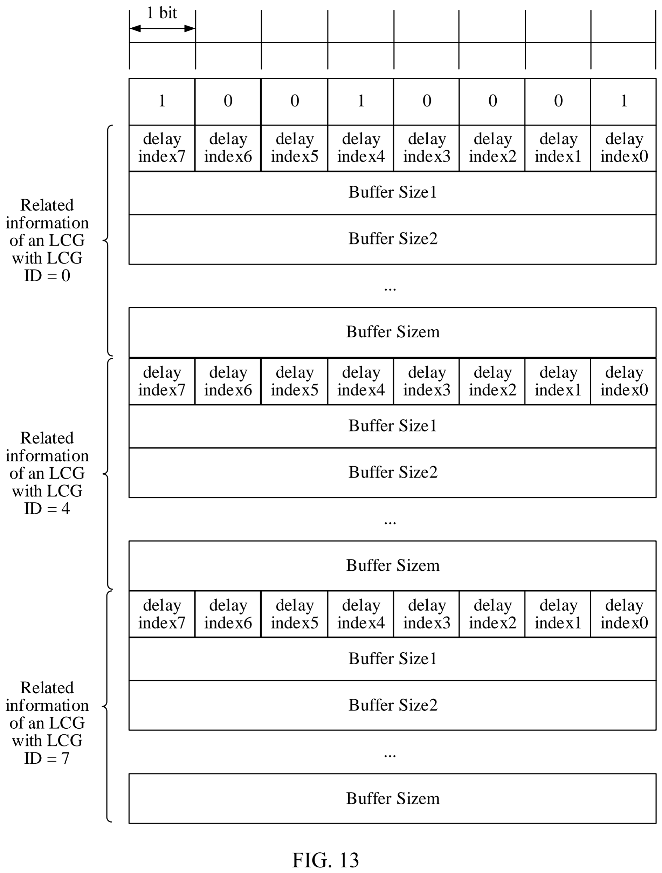

For example, as shown in FIG. 13, it is assumed that values of LCG0, LCG4, and LCG7 fields are 1, indicating that related information of LCGs with LCG ID = 0, LCG ID = 4, and LCG ID = 7 appears in the DSR MAC CE, and values of other third fields are 0, indicating that related information of corresponding LCGs does not appear in the DSR MAC CE. A delay index0 field to a delay index7 field (that is, first fields corresponding to each of LCG0, LCG4, and LCG7) indicating the first delay information of the data in LCG0, LCG4, and LCG7, and Buffer Size1 to Buffer Sizem (that is, second fields corresponding to each of LCG0, LCG4, and LCG7) indicating the first data amount are after the third field in a sequence of LCG0, LCG4, and LCG7.

Further, for example, the first delay information includes a time interval, and the time interval indicates a remaining transmission delay budget. It is assumed that in the DSR MAC CE shown in FIG. 13, a correspondence between time intervals and a delay index0 field to a delay index7 field corresponding to each LCG is shown in Table 2. If there is one piece of data (denoted as data 1) in LCG0, and a remaining transmission delay budget of the data is 12 ms, in a delay index0 field to a delay index7 field corresponding to LCG0, a value of the delay index2 field is 1, indicating that the DSR MAC CE reports a data amount of data whose remaining transmission delay budget is greater than 10 ms and does not exceed 15 ms in LCG0. Correspondingly, in this case, the DSR MAC CE includes a Buffer Size field corresponding to LCG0. The Buffer Size field indicates a data amount of data (that is, the data 1) whose remaining transmission delay budget is greater than 10 ms and does not exceed 15 ms in LCG0. If there is one piece of data (denoted as data 2) in LCG4, and a remaining transmission delay budget of the data is 7 ms, in a delay index0 field to a delay index7 field corresponding to LCG4, a value of the delay index1 field is 1, indicating that the DSR MAC CE reports a data amount of data whose remaining transmission delay budget is greater than 5 ms and does not exceed 10 ms in LCG4. Correspondingly, in this case, the DSR MAC CE includes a Buffer Size field corresponding to LCG4. The Buffer Size field indicates a data amount of data (that is, the data 2) whose remaining transmission delay budget is greater than 5 ms and does not exceed 10 ms in LCG4. If there is one piece of data (denoted as data 3) in LCG7, and a remaining transmission delay budget of the data is 16 ms, in a delay index0 field to a delay index7 field corresponding to LCG7, a value of the delay index3 field is 1, indicating that the DSR MAC CE reports a data amount of data whose remaining transmission delay budget is greater than 15 ms and does not exceed 20 ms in LCG7. Correspondingly, in this case, the DSR MAC CE includes a Buffer Size field corresponding to LCG7. The Buffer Size field indicates a data amount of data (that is, the data 3) whose remaining transmission delay budget is greater than 15 ms and does not exceed 20 ms in LCG7.

Optionally, as shown in FIG. 8, after S801, the second device may further perform S802.

S802. After receiving the first information, the second device may interpret the first information, and determine the delay information of the to-be-transmitted first data of the first device and the corresponding first data amount, to schedule a proper uplink resource for the first device based on the first information.

According to the information reporting method provided in this embodiment of this application, the first field in the first information may indicate both the first delay information and whether the first information includes the first data amount, and further, the second field different from the first field indicates the first data amount. Only if the first data amount is reported, the second field appears in the first information. If the first data amount is not reported, the second field does not appear in the first information. In this way, only a data amount of data that matches delay information can be reported while the delay information is indicated, to avoid reporting invalid delay information and data amount information.

Optionally, if the first device generates a plurality of pieces of first information, different first information may be separately sent, or may be carried in a same message, signaling, or PDU together. For example, assuming that the first information is a DSR MAC CE, the plurality of DSR MAC CEs generated by the first device may be carried in different MAC PDUs, or may be carried in a same MAC PDU.

The foregoing describes a specific implementation of the information reporting method shown in FIG. 8. In addition, it can be learned from the foregoing descriptions that, the data amount reported by the BSR is indicated by an index, different indexes in the BS table correspond to different data amount ranges, and the Buffer Size field in the BSR may indicate an index to indicate a corresponding data amount range in the BS table. In addition, because a bit quantity of the Buffer Size field is in one-to-one correspondence with the BS table, a receiving end of the BSR may select a unique corresponding BS table based on the BSR to interpret the BSR and learn of the data amount indicated by the BSR. Therefore, there is no confusion.

However, for data with a large data amount, if the data amount is indicated based on the current BS table, a data interval indicated by adjacent indexes in the BS table is large, which may cause a waste of resources. Therefore, in technical evolution, a new BS table may be further evolved. In this case, a Buffer Size field of a same quantity of bits may correspond to a plurality of BS tables. For example, there is a BS table 1 (for example, Table 1 shown above) and new BS tables: a BS table 2 and a BS table 3, where each table includes 256 indexes, that is, the indexes in the table may be indicated by using an 8-bit Buffer Size field. Therefore, the 8-bit Buffer Size field may use the BS table 1, the BS table 2, or the BS table 3. In this case, the receiving end may not be able to determine whether the index indicated by the Buffer Size field needs to be interpreted by using the BS table 1, the BS table 2, or the BS table 3, which causes confusion.

Therefore, to avoid possible confusion, an embodiment of this application further provides a solution in which a receiving end (for example, a second device) of a data amount determines a table used for the data amount reported by the first device (a table including a correspondence between an index and a data amount, and used to interpret the data amount reported by the first device).

Optionally, the table used for the data amount reported by the first device may be a BS table. In other words, this solution may be applied to a scenario in which the first device has a plurality of available BS tables, so that a receiving end (for example, the second device) of the BSR determines a BS table used for the BSR sent by the first device.

Optionally, it can be learned from the foregoing embodiment that, in an optional solution of the information reporting method shown in FIG. 8, the first data amount reported based on the first information may be indicated by using the first index included in the second field, and the correspondence between the first index and the first data amount is determined based on a first status report list. Therefore, confusion that may occur when the BSR uses a plurality of BS tables may also occur in the first information in this embodiment of this application. To avoid this problem, this solution may also be applied to the information reporting method shown in FIG. 8, so that the second device determines the first status report list used for the first information sent by the first device.

The following uses an example in which the solution is applied to the information reporting method shown in FIG. 8 to describe a specific implementation of determining the first status report list used for the first information.

Optionally, the first status report list used for the first information may be implicitly determined. In a possible implementation, the second device may configure the first status report list for the first device, and then the first information generated by the first device uses the configured first status report list. For example, the second device configures the first status report list for the first device in a semi-static manner (for example, an RRC message).

Optionally, the second device may configure the first status report list at a granularity of the first device. In other words, a same first status report list is used for all first information generated by the first device. Alternatively, the second device may configure the first status report list at a granularity of the first information. For example, assuming that the first information is a DSR MAC CE, the second device may configure, by using an RRC message, DSR MAC CE0 to use a status report list 1, DSR MAC CE1 to use a status report list 2, and the like. Different DSR MAC CEs may be identified by using identification information, for example, may be identified by using an LCID, and the LCID may be located in a subheader of the DSR MAC CE. Alternatively, the second device may configure the first status report list at a granularity of an LCH/LCG. For example, the first status report list is configured at a granularity of an LCG. The second device configures a first status report list 1 for an LCG with LCG ID = 0, and configures a first status report list 2 for an LCG with LCG ID = 1. When the first information reported by the first device includes a data amount of a data in an LCG with LCG ID = 0, the second device may parse the data amount of the data in the LCG with LCG ID = 0 based on the first status report list 1. When the first information reported by the first device includes a data amount of data in an LCG with LCG ID = 1, the second device may parse the data amount of the data in the LCG with LCG ID = 1 based on the first status report list 2. Alternatively, the second device may configure the first status report list at a granularity of the first field (which may also be understood as a granularity of the first delay information). In this manner, one or more first fields in the first information may use one first status report list. For example, it is assumed that the first information includes eight first fields: a delay index0 field to a delay index7 field. The second device configures a corresponding first status report list for each delay index field. The delay index0 field and the delay index1 field correspond to a first status report list 1, and the delay index2 field corresponds to a first status report list 2. If the delay index0 field indicates that the first information includes a corresponding first data amount, the second device may interpret, based on the first status report list 1, the data amount indicated by the Buffer Size field corresponding to the delay index0 field in the first information. If the delay index2 field indicates that the first information includes a corresponding first data amount, the second device may interpret, based on the first status report list 2, the data amount indicated by the Buffer Size field corresponding to the delay index2 field in the first information.

In a possible implementation, the first device may preconfigure a first status report list used for the first information. Optionally, the first status report list may be preconfigured at a granularity of the first device, or may be preconfigured at a granularity of the first information. For details, refer to the description that the second device configures the first status report list at a granularity of the first device/first information/LCH/LCG/first field. Details are not described herein.

Further, if the first device preconfigures the first status report list used for the first information, the second device may preconfigure a same first status report list.

Alternatively, the first status report list used for the first information may be explicitly determined. The explicit manner may be understood as a dynamic indication manner. In this manner, the first information may include indication information, and the indication information indicates a first status report list used for the first information. The indication information is referred to as first indication information below for description.

Optionally, the first indication information may be at a granularity of first information. In this case, the first information includes one piece of first indication information, and the first indication information indicates a same first status report list used for all data amounts included in the first information. Alternatively, the first indication information may be at a granularity of first delay information (or a granularity of a first field). In this case, each first field corresponds to one piece of first indication information, and the first indication information indicates a first status report list used for a corresponding first data amount. Alternatively, the first indication information may be at a granularity of an LCH/LCG. In this case, the first indication information indicates a first status report list used for a first data amount corresponding to data in a corresponding LCH/LCG.

Further, if the first indication information is at a granularity of first delay information, to reduce overheads of the first information, compared with a case in which the first information does not include the first indication information, a quantity of first fields in the first information may be appropriately reduced. For example, the quantity of first fields may be 4.

Optionally, the explicit manner may be applied to a scenario in which the first device has a plurality of available first status report lists. The first status report list available to the first device may be obtained based on the foregoing manner of obtaining the first status report list (for example, the foregoing manner in which the second device configures the first status report list at a granularity of the first device/first information/LCH/LCG/first field). Details are not described herein again.

Optionally, the first indication information may indicate an index of the first status report list used for the first information. The second device may determine, based on the index used for the first indication information, the first status report list used for the first information. For example, the protocol defines three first status report lists, and indexes of the three first status report lists are 0, 1, and 2 respectively. If the first indication information indicates an index 2, the second device may determine, based on the first indication information, that the first information uses the first status report list whose index is 2.

For example, the first indication information may be a field (which may be referred to as a fifth field). In a possible implementation, a size or a bit width of the first indication information may be determined based on a quantity of first status report lists available to the first device. For example, the first indication information may include $\lceil \log_2 N \rceil$ bits, where $\lceil \cdot \rceil$ represents a rounding up operation. If the first indication information is at a granularity of first information, N is a quantity of first status report lists available to the first information. If the first indication information is at a granularity of a first field, N is a quantity of first status report lists available to the second field. If the first indication information is at a granularity of an LCH/LCG, N is a quantity of first status report lists available to the LCH/LCG.

Optionally, in the first information, a quantity of bits of the field corresponding to the first indication information and a quantity of bits of the first field may form 1 byte.

For ease of understanding, the following describes, with reference to an example, how the first indication information indicates the first status report list used for the first information.

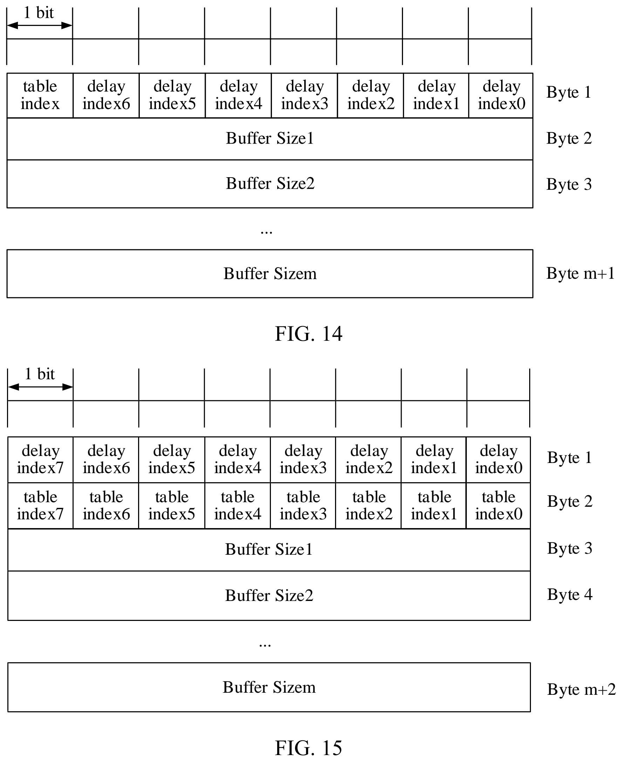

For example, if the first information is a DSR MAC CE, and the first indication information is at a granularity of first information, FIG. 14 is a diagram of a structure of a DSR MAC CE including first indication information in Scenario 1. The first indication information is a table index field in FIG. 14. For details of other fields in FIG. 14, such as a delay index field and a Buffer Size field, refer to the example shown in FIG. 9. Details are not described herein again. The table index field may indicate a first status report list used for all data amounts included in the DSR MAC CE, for example, may indicate an index of the used first status report list.

For example, if the first information is a DSR MAC CE, and the first indication information is at a granularity of first delay information, FIG. 15 is another diagram of a structure of a DSR MAC CE including first indication information in Scenario 1. The first indication information is table index fields in FIG. 15: a table index0 field to a table index7 field. For details of other fields in FIG. 15, such as a delay index field and a Buffer Size field, refer to the example shown in FIG. 9. Details are not described herein again. Each table index field corresponds to a delay index field, used to indicate a first status report list used for a corresponding first data amount. For example, a table index0 field corresponds to a delay index0 field, the delay index0 field indicates whether the first information includes a data amount whose remaining transmission delay budget is less than 5 ms, a Buffer Size field corresponding to the delay index0 field indicates a data amount whose remaining transmission delay budget is less than 5 ms, and the table index0 field indicates a first status report list used for the Buffer Size field corresponding to the delay index0 field. In this scenario, a quantity of table index fields may be the same as a quantity of delay index fields.

Further, a quantity of table index fields may be different from a quantity of delay index fields. For example, the quantity of delay index fields may be an integer multiple of the quantity of table indexes. In this case, one table index field may be used for a plurality of delay index fields. For example, it is assumed that the quantity of delay index fields is twice the quantity of table index fields. In this scenario, one table index field may indicate first status report lists used for data corresponding to two delay index fields. For example, table index0 may correspond to delay index0 and delay index1. In this case, first status report lists used for Buffer Size fields corresponding to delay index0 and delay index1 are indicated by table index0. A quantity of delay index fields that may correspond to one table index field may be semi-statically configured (for example, by using an RRC message), preconfigured, or configured in another manner.

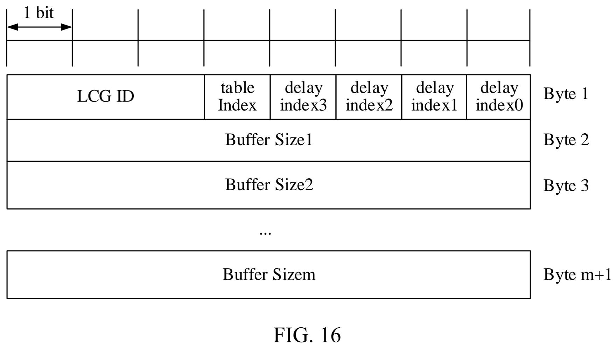

For example, if the first information is a DSR MAC CE, and the first indication information is at a granularity of first information, FIG. 16 is a diagram of a structure of a DSR MAC CE including first indication information and one third field (an LCG ID indication field in FIG. 16) in Scenario 2. The first indication information is a table index field in FIG. 16. For details of other fields in FIG. 16, such as a delay index field and a Buffer Size field, refer to the example shown in FIG. 11. Details are not described herein again. The table index field may indicate a first status report list used for all data amounts included in the DSR MAC CE, for example, may indicate an index of the used first status report list.

Further, the DSR MAC CE shown in FIG. 16 is used as an example. If the first indication information (for example, the table index field in FIG. 16) in the DSR MAC CE is at a granularity of first delay information, the table index field may be in one-to-one correspondence with a delay index field (not shown in FIG. 16), and indicates a first status report list used for the first data amount corresponding to the delay index field. For example, the DSR MAC CE may include four table index fields, which respectively correspond to a delay index0 field to a delay index3 field.

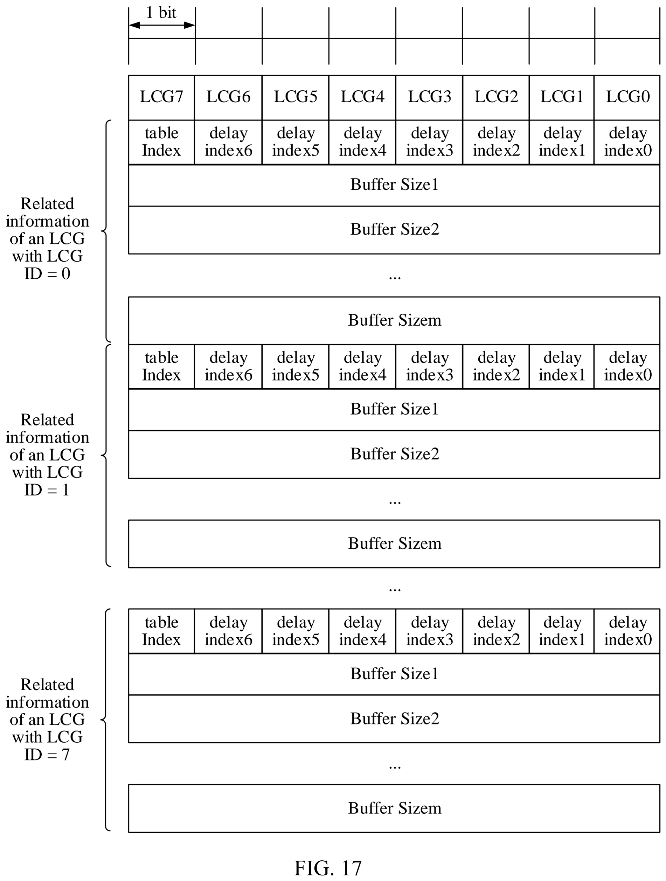

For example, if the first information is a DSR MAC CE, and the first indication information is at a granularity of an LCG, FIG. 17 is a diagram of a structure of a DSR MAC CE including first indication information and a plurality of third fields (an LCG0 field to an LCG7 field in FIG. 17) in Scenario 2. The first indication information is a table index field in FIG. 17. For details of other fields in FIG. 17, such as a delay index field and a Buffer Size field, refer to the example shown in FIG. 12. Details are not described herein again. Each table index field corresponds to each third field, used to indicate a first status report list used for a first data amount of data in a corresponding LCG. For example, if the LCG0 field indicates that the first information includes related information of an LCG with LCG ID = 0, in the related information of the LCG with LCG ID = 0, the table index field indicates first status report lists used for a Buffer Size1 field to a Buffer Sizem field corresponding to the LCG with LCG ID = 0.

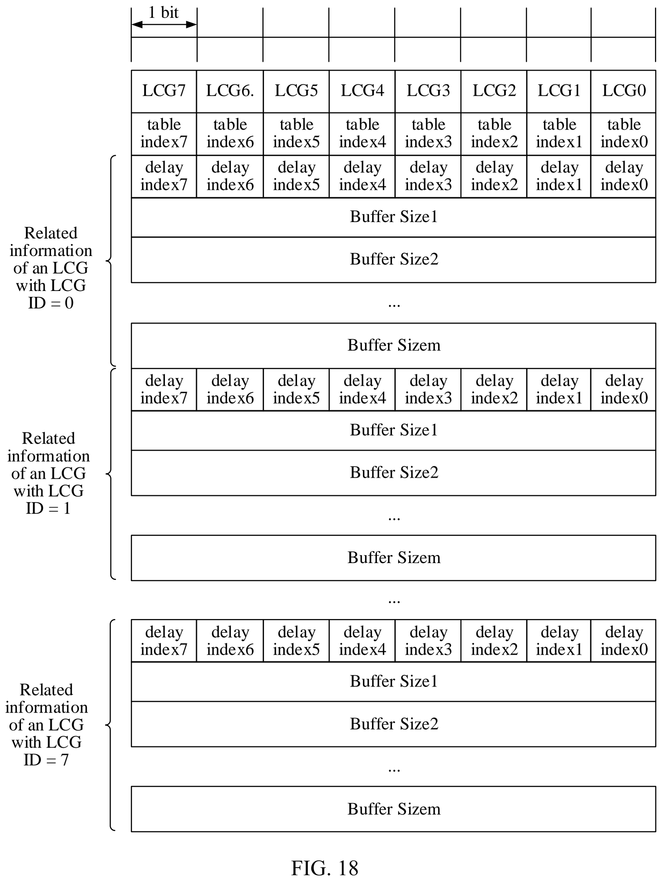

For example, if the first information is a DSR MAC CE, and the first indication information is at a granularity of an LCG, FIG. 18 is another diagram of a structure of a DSR MAC CE including first indication information and a plurality of third fields (an LCG0 field to an LCG7 field in FIG. 18) in Scenario 2. The first indication information is table index fields in FIG. 18: a table index0 field to a table index7 field. For details of other fields in FIG. 18, such as a delay index field and a Buffer Size field, refer to the example shown in FIG. 12. Details are not described herein again. Each table index field corresponds to each third field, used to indicate a first status report list used for a first data amount of data in a corresponding LCG. For example, if the LCG0 field indicates that the first information includes related information of an LCG with LCG ID = 0, the table index0 field may indicate first status report lists used for a Buffer Size1 field to a Buffer Sizem field corresponding to the LCG with LCG ID = 0.

Further, a DSR MAC CE shown in FIG. 17 or FIG. 18 is used as an example. If the first indication information (for example, a table index field in FIG. 17 or FIG. 18) in the DSR MAC CE is at a granularity of first information, the DSR MAC CE may include one table index field, used to indicate first status report lists used for all first data amounts in the first information.

For example, in the foregoing embodiment, the structure of the DSR MAC CE shown in FIG. 9 to FIG. 18 does not include a subheader corresponding to the DSR MAC CE. Optionally, a subheader including at least 1 byte may be further added to the structure of the DSR MAC CE shown in FIG. 9 to FIG. 18 to identify the DSR MAC CE.

In addition, in the foregoing embodiment, a possible implementation of determining the first status report list used for the first information may also be applied to a scenario in which the BS table used for the BSR is determined. For example, the BS table used for the BSR may be implicitly or explicitly determined. For details, refer to the foregoing descriptions of implicitly or explicitly determining the first status report list used for the first information. Adaptive adjustment is needed. The details are not described herein again.

In the foregoing embodiment, when the first delay information indicates the remaining transmission delay budget/storage duration of the first data, the following describes the remaining transmission delay budget/storage duration of the data (for example, the first data) in detail.

The remaining transmission delay budget of the data refers to time that may be further used to transmit data over an air interface, and may be determined based on valid transmission duration of the data.

Optionally, the valid transmission duration may be understood as a transmission delay requirement of the data, for example, a transmission delay budget or a packet discard delay budget. For example, the transmission delay budget may mean that a packet delay budget (packet delay budget, PDB) or a PDU set delay budget (PDU set delay budget, PSDB) corresponding to the data expires. The PDB may be understood as a delay requirement from the first device to the network device or to a user plane function (user plane function, UPF), that is, duration from a time at which a PDU arrives at the first device to a time at which the PDU is successfully received by the network device or the UPF, and is usually configured by a core network (core network, CN) by using a 5G QoS identifier (5G QoS identifier, 5QI). The PSDB may be understood as a transmission delay requirement of a PDU set, for example, duration from a time at which a first PDU in the PDU set arrives at the first device to a time at which all PDUs in the PDU set are successfully received by the network device or the UPF. Optionally, the PSDB may be configured by the core network.

Alternatively, the valid transmission duration may be understood as a packet discard delay budget of the data, and the packet discard delay budget may be understood as that the data is discarded after duration corresponding to the delay budget, that is, the data is not sent by the first device as initial transmission. Generally, the packet discard delay budget may be implemented by a PDCP layer. For example, the PDCP layer configures a packet discard timer for each service data unit (service data unit, SDU). When an SDU from a higher layer arrives at the PDCP layer, the timer is started. When the timer expires, the corresponding SDU or PDU is discarded.

In other words, the first device may determine (or referred to as obtain) the valid transmission duration of the data in the following manner:

The first device obtains first configuration information, where the first configuration information is used to configure first duration, the first duration is valid transmission duration of the data, and a start moment of the first duration is an arrival moment of the data (that is, a moment at which the data arrives at the first device).

Optionally, if the data includes a plurality of data units, a moment at which the data arrives at the first device may be understood as a moment at which one data unit in the data arrives at the first device. For example, when the data is a PDU set or a data burst, a moment at which the data arrives at the first device may be understood as a moment at which a PDU in the PDU set or the data burst arrives at the first device, for example, may be a moment corresponding to a first PDU that arrives at the first device in the PDU set or the data burst. It may be understood that the first PDU that arrives at the first device is not necessarily a first PDU in the PDU set or the data burst to which the PDU belongs based on a generation or sending sequence.

Optionally, a moment at which a data unit (or data including one data unit) arrives at the first device may be understood as a moment at which the data unit arrives at an access stratum (access stratum, AS) of the first device, or may be a moment at which the data unit arrives at a service data adaptation protocol (service data adaptation protocol, SDAP) layer, a PDCP layer, a radio link control (radio link control, RLC) layer, an LCH layer, or a MAC layer. This is not limited in this embodiment of this application.

In addition, optionally, if the data includes a plurality of data units, a moment at which the data is received by the second device (or referred to as a moment at which the data arrives at the second device) may be understood as a moment at which all data units included in the data arrive at the second device. For example, when the data is a PDU set or a data burst, a moment at which the data arrives at the second device may be understood as a moment at which all PDUs in the PDU set or the data burst arrive at the second device, that is, a moment corresponding to a last PDU that arrives at the second device in the PDU set or the data burst. The last PDU that arrives at the first device is not necessarily a last PDU in the PDU set or the data burst to which the PDU belongs based on a generation or sending sequence, or is not necessarily a last PDU that arrives at the first device in the PDU set or the data burst to which the PDU belongs.

Optionally, a moment at which a data unit (or data including one data unit) arrives at the second device may be understood as a moment at which the data arrives at an AS, an SDAP layer, a PDCP layer, an RLC layer, an LCH layer, or a MAC layer of the second device. This is not limited in this embodiment of this application.

When the valid transmission duration is understood as a packet discard delay budget of the data, the first configuration information may be used to configure a packet discard timer. When the data arrives, the first device starts a packet discard timer. When the packet discard timer expires, the first device discards the first data. In this case, the first duration is running duration of the packet discard timer.

When the valid transmission duration is understood as a transmission delay budget of the data, the first configuration information may be used to configure a PDB or a PSDB. A moment at which the data arrives at the first device is a start moment of the PDB or the PSDB.

The remaining transmission delay budget of the data may be determined (or referred to as obtained) based on a trigger moment of the first information (that is, a moment at which the first information is triggered) or a sending moment of the first information (that is, a moment at which the first information is sent) and valid transmission duration. Specifically, if duration of the remaining transmission delay budget of the data is referred to as second duration, a start moment of the second duration may be a trigger moment of the first information or a moment at which the first information is sent, and an end moment (or referred to as an end moment) of the second duration may be an end moment of the valid transmission duration.

The storage duration of the first data is duration for which the data has been stored in the first device. A start moment of the storage duration of the data is an arrival moment of the data (that is, a moment at which the data arrives at the first device). The end moment of the storage duration of the data may be a moment at which the first information is triggered or a moment at which the first information is sent.

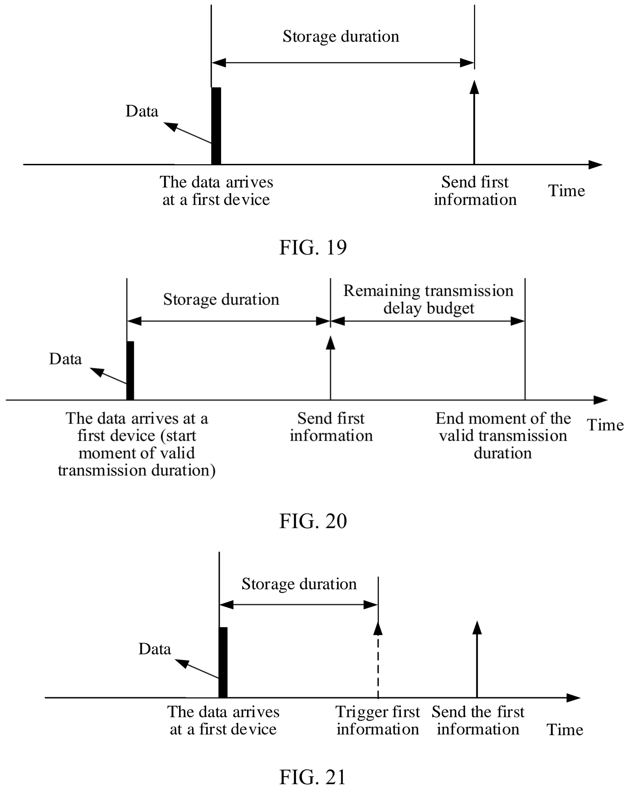

For example, when the remaining transmission delay budget/storage duration is determined based on the moment at which the first information is sent, as shown in FIG. 19 and

FIG. 20, a start moment of the duration (that is, the second duration) of the remaining transmission delay budget of the data is the moment at which the first information is sent, and an end moment of the duration is a corresponding moment at which the valid transmission duration of the data expires. A start moment of the storage duration of the data is an arrival moment of the data, and an end moment of the storage duration of the data is a moment at which the first information is sent. In other words, the valid transmission duration may be divided into a sum of the storage duration and the remaining transmission delay of the data.

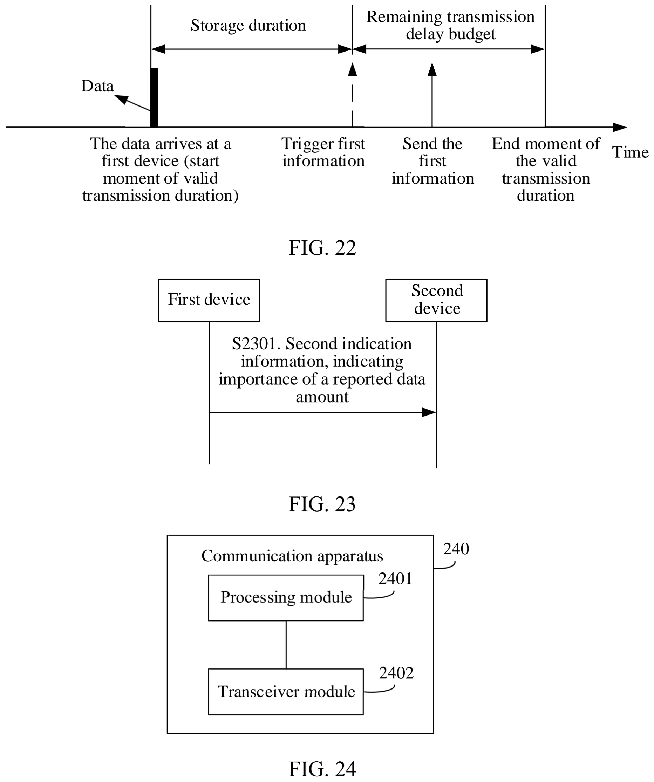

For another example, when the remaining transmission delay budget/storage duration is determined based on the moment at which the first information is triggered, as shown in FIG. 21 and FIG. 22, a start moment of the remaining transmission delay budget is a moment at which the first information is triggered, and an end moment of the remaining transmission delay budget is a corresponding moment at which the valid transmission duration of the data expires. A start moment of the storage duration of the data is an arrival moment of the data, and an end moment of the storage duration of the data is a moment at which the first information is triggered.

The moment at which the first information is sent may be an initial transmission moment of the first information.

The moment at which the first information is triggered is a moment at which the first device performs S803. After the condition for triggering the first information is met, the first device may perform S803. Details are described below.

Optionally, triggering of the first information may be related to delay information.

For example, the first information may be triggered when storage duration of to-be-transmitted data is equal to or exceeds a threshold. For example, the first device receives threshold information, and when storage time of data reaches (greater than or equal to) the threshold, the first information is triggered. For uplink transmission, a start moment at which the data has been stored may be considered as a moment at which the data arrives at the first device.

Alternatively, the first information may be triggered when the remaining transmission delay budget of the to-be-transmitted data is less than or equal to a threshold. For example, the first device receives threshold information, and when a remaining delay budget of data of the first device is less than or equal to the threshold, the first information is triggered.

Alternatively, the first information may be triggered based on a data amount. For example, when a data amount of an LCH or an LCG reaches (greater than or equal to, and details are not described below), the first information is triggered. It should be understood that because one first device may have a plurality of LCHs and LCGs, first information triggered by any LCH or LCG may include delay information of another LCG or LCH, or delay information and a related data amount.

Optionally, a threshold for triggering the first information may be preconfigured in the first device, or may be configured by using higher layer signaling (for example, an RRC message), or may be predefined in a protocol. A manner in which the first device obtains the threshold is not specifically limited in this embodiment of this application.

Optionally, if the threshold for triggering the first information is related to a delay, a unit of the threshold may be any time unit, for example, a millisecond, or may be a communication-related unit, for example, a slot, a subframe, or a system frame. This is not specifically limited in this embodiment of this application. When the threshold for triggering the first information is related to a data amount, a unit of the threshold may be a bit, a byte, or the like. This is not specifically limited in this embodiment of this application.

In addition, because data of some services is important, an embodiment of this application further provides another information reporting method to enable the network device to properly schedule a resource. As shown in FIG. 23, the information reporting method may include step S2301.

S2301. The first device may send second indication information to the second device, where the second indication information may indicate importance of data corresponding to a data amount reported by the first device.

Optionally, the first device may first report the data amount, and then send the second indication information, to indicate importance of data corresponding to a previously reported data amount. Alternatively, the first device may first send the second indication information, to indicate importance of data corresponding to a subsequently reported data amount, and then report the data amount. Alternatively, the second indication information may be sent together with the data amount, and the second indication information indicates importance of data corresponding to the data amount sent together.

The second indication information and the information indicating the data amount may be carried in same information. Alternatively, the second indication information and the information indicating the data amount may be carried in different information. If the second indication information and the information indicating the data amount are carried in different information, the second indication information and the information indicating the data amount may be sent together. For example, the second indication information and the information indicating the data amount may be sent on a same uplink resource. Alternatively, the second indication information and the information indicating the data amount may not be sent simultaneously. For example, the second indication information and the information indicating the data amount may be sent on different uplink resources. Alternatively, the second indication information may be periodically and independently sent, where the periodicity may be semi-statically configured, for example, may be configured by the second device by using an RRC message.

Optionally, the information reporting method shown in FIG. 23 may be applied in combination with the information reporting method shown in FIG. 8, or may be applied independently. For example, in the information reporting method shown in FIG. 23, the second indication information may indicate importance of data corresponding to a data amount reported based on the BSR, or may indicate importance of data corresponding to a data amount reported based on the first information.

For example, the second indication information may be carried in a MAC CE, for example, may be a field in the MAC CE, or may be user assistance information.

Optionally, if the information reporting method shown in FIG. 23 and the information reporting method shown in FIG. 8 are applied in combination, the following uses an example in which the second indication information is a field (which may be referred to as a fourth field) carried in the first information to describe in detail how the fourth field indicates importance of data corresponding to the data amount reported based on the first information.

In a possible implementation, the fourth field indicates overall importance of a piece of data. For example, the fourth field may be a 1-bit field. When a value of the fourth field is 1, it indicates that a data amount reported based on the first information is a data amount of important data, and when a value of the fourth field is 0, it indicates that a data amount reported based on the first information is a data amount of unimportant data.

Optionally, the importance indicated by the fourth field may be data (which may be referred to as second data) corresponding to a total data amount (which may be referred to as a third data amount) indicated by all second fields included in the first information. In other words, the fourth field may indicate importance of data corresponding to the total data amount reported based on the first information.

For example, in the example shown in FIG. 11, there may be one additional bit (that is, a fourth field). When a value of the fourth field is 1, it indicates that all data amounts reported based on the first information is a data amount of important data, and when a value of the fourth field is 0, it indicates that a data amount reported based on the first information is a data amount of unimportant data.

Optionally, in this implementation, fourth fields may also be distinguished based on the first delay information. In other words, for each piece of first delay information or every pieces of first delay information indicated by the first information, the first information includes a corresponding fourth field, used to indicate importance of first data corresponding to the corresponding first delay information.

For example, in the example shown in FIG. 11, there may be five additional fourth fields. A size of each fourth field is 1 bit, and each bit corresponds to each delay index. When a delay index indicates that a DSR MAC CE includes a corresponding first data amount, a fourth field corresponding to the DSR MAC CE may indicate importance of data corresponding to the first data amount.

Optionally, in this implementation, fourth fields may also be distinguished based on the DRB/LCH/LCG. For example, it is assumed that the first information includes a plurality of third fields, which are respectively used to indicate different LCGs. In this case, the first information may further include a fourth field corresponding to each third field, which is used to indicate importance of data corresponding to all first data amounts in an LCG corresponding to the third field.

In another possible implementation, the important/unimportant data in the second data may be referred to as third data, and the fourth field may indicate whether a data amount of the third data reaches a first threshold. In this case, the first threshold may be a value. Alternatively, the fourth field further indicates whether a proportion of the data amount of the third data to the third data amount reaches the first threshold. In this case, the first threshold may be a proportion. For example, when the value of the fourth field is 1, it indicates that the proportion of the data amount of the third data to the third data amount exceeds the first threshold. On the contrary, when the value of the fourth field is 0, it indicates that the proportion of the data amount of the third data to the third data amount does not exceed the first threshold.

That is, the fourth field may indicate whether a data amount of important/unimportant data reaches the first threshold, or whether a proportion of the data amount of the important/unimportant data reaches the first threshold in the data corresponding to the total data amount reported based on the first information. It may be understood that, in this implementation, the fourth field is specific to a total data amount reported based on one piece of first information, and the first information includes one fourth field.

Alternatively, the fourth field may indicate whether a data amount of important/unimportant data in the data corresponding to the total data amount received by the first device reaches the first threshold. The total data amount received by the first device may be a total data amount of data received by all DRBs/LCHs/LCGs in the first device, and the data amount of the important/unimportant data may be a data amount of important/unimportant data received by all DRBs/LCHs/LCGs in the first device. Further, data of some DRBs/LCHs/LCGs has an importance difference, and data of some DRBs/LCHs/LCGs has no importance difference. For DRBs/LCHs/LCGs that have no importance difference, all data in these DRBs/LCHs/LCGs may be considered as important or unimportant. Optionally, importance of the data of the DRBs/LCHs/LCGs may be determined in a semi-static configuration (for example, an RRC message), a preconfiguration manner, or another manner.

Alternatively, the fourth field may indicate whether a data amount of important/unimportant data relative to a total data amount of data in one LCH/LCG (or more LCHs/LCGs) in data corresponding to a total data amount received by the DRB/LCH/LCG (or the more LCHs/LCGs) in all DRBs/LCHs/LCGs of the first device exceeds a first threshold. That is, for important/unimportant data, only the data in the DRB/LCH/LCG (or the more DRBs/LCHs/LCGs) may be considered, and for data corresponding to the total data amount, only data in the DRB/LCH/LCG (or the more DRBs/LCHs/LCGs) may be considered.

In this implementation, the first device may obtain the first threshold in any one of the following manners: The first threshold is semi-statically configured (for example, the network device configures the first threshold by using an RRC message), the first threshold is preconfigured in the first device (in this manner, the second device may also preconfigure the first threshold), the first threshold is pre-agreed on by the first device and the second device, or the first threshold is predefined in a protocol.

In another possible implementation, the important/unimportant data in the first data may be referred to as fourth data, and the fourth field may indicate whether a data amount of the fourth data reaches a second threshold. In this case, the second threshold may be a value. Alternatively, the fourth field further indicates whether a proportion of the data amount of the fourth data to the first data amount reaches a second threshold. In this case, the second threshold may be a proportion. This implementation may also be understood as that whether the data amount indicated by the fourth field reaches the second threshold is at a granularity of the first field (or referred to as first delay information).

That is, the fourth field may indicate whether a data amount of important/unimportant data reaches the second threshold, or whether a proportion of the data amount of the important/unimportant data reaches the second threshold in the data corresponding to a first data amount reported based on the first information. It may be understood that, in this implementation, the fourth field is specific to one first data amount, and a quantity of fourth field included in the first information may correspond to a quantity of first data amounts.

Alternatively, whether the data amount indicated by the fourth field reaches the second threshold may be at a granularity of a DRB/LCH/LCG. In this implementation, the fourth field may indicate whether a data amount of important/unimportant data in a data amount (for example, a second data amount) of a DRB/LCH/LCG reported based on the first information reaches a second threshold. In this case, the second threshold may be a value. Alternatively, the fourth field further indicates whether a proportion of a data amount of important/unimportant data to a total data amount of a DRB/LCH/LCG in a data amount of the DRB/LCH/LCG reported based on the first information reaches a second threshold.

In this case, the second threshold may be a proportion.

Optionally, in this implementation, for a manner in which the first device obtains the second threshold, refer to the manner in which the first device obtains the first threshold. Details are not described herein again.

In another possible implementation, the fourth field may indicate a proportion of a data amount of unimportant/important data received by the first device to a total data amount on all DRBs/LCHs/LCGs of the first device within specific duration. Alternatively, the fourth field may indicate whether a proportion of a data amount of unimportant/important data received by the first device to a total data amount on all DRBs/LCHs/LCGs of the first device within specific duration reaches a third threshold. In this case, the third threshold may be a proportion.

Alternatively, the fourth field may indicate a proportion of a data amount of unimportant/important data on a DRB/LCH/LCG of the first device to a total data amount on the DRB/LCH/LCG within specific duration. Alternatively, the fourth field may indicate whether a proportion of a data amount of unimportant/important data on a DRB/LCH/LCG of the first device to a total data amount on the DRB/LCH/LCG within specific duration reaches a third threshold. In this case, the third threshold may be a proportion.

Optionally, a start moment of the specific duration may be a moment at which indication information from the second device is received, and an end moment of the specific duration may be a sending moment or a triggering moment of the first information. Alternatively, a start moment of the specific duration may be a moment at which the first information is sent, and an end moment of the specific duration may be a sending moment at which next adjacent first information is sent, that is, an interval of the specific duration is an interval between sending moments of two adjacent pieces of first information. Alternatively, the specific duration may be determined in a manner such as semi-static configuration (for example, an RRC message), preconfiguration, or dynamic indication.

Optionally, in this implementation, for a manner in which the first device obtains the third threshold, refer to the manner in which the first device obtains the first threshold. Details are not described herein again.

In addition, in the foregoing embodiment, a possible implementation in which the fourth field indicates the importance of the data corresponding to the data amount reported based on the first information may also be applied to a case in which the second indication information is independent of the first information. For example, if the second indication information is user assistance information, and the first information is a DSR MAC CE, in a possible implementation, the second indication information may indicate importance of data corresponding to a total data amount included in the DSR MAC CE. In another possible implementation, the indication information may also indicate whether a data amount of important/unimportant data reaches the first threshold, or whether a proportion of the data amount of the important/unimportant data reaches the first threshold in the data corresponding to the total data amount reported based on the first information. For details about the two implementations and another implementation, refer to the foregoing descriptions of the possible implementation in which the fourth field indicates the importance of the data corresponding to the data amount reported based on the first information. Details are not described herein again.

In addition, optionally, if the second indication information is sent independently of the information indicating the data amount, for example, the second indication information is reported by using user assistance information, the importance of the data indicated by the second indication information may be at a granularity of the first device. In a possible implementation, the second indication information may directly indicate the data amount of the important/unimportant data. Alternatively, the second indication information may indicate whether the important/unimportant data reaches a threshold. Alternatively, the second indication information may indicate whether a data amount of important/unimportant data in all data received by the first device, that is, all data for which DRBs/LCHs/LCGs are not distinguished, within specific duration reaches a threshold. For example, the second indication information has two values. One value indicates that important/unimportant data reaches a threshold, and the other value indicates that important/unimportant data does not reach the threshold. Alternatively, the second indication information indicates that the important/unimportant data has reached a threshold. This implementation may also be understood as that the first device sends the second indication information to notify the second device only when the important/unimportant data reaches a threshold. That is, in this scenario, when the second device receives the second indication information, the second device may consider that the important/unimportant data of the first device reaches a threshold.

Optionally, the second indication information may be periodically sent, where the periodicity may be determined in a manner such as semi-static configuration (for example, an RRC message), preconfiguration, or dynamic indication.

Optionally, data of some DRBs/LCHs/LCGs has an importance difference (which means that the data is important/unimportant), and data of some DRBs/LCHs/LCGs has no importance difference. For DRBs/LCHs/LCGs that have no importance difference, all data in these DRBs/LCHs/LCGs may be considered as important or unimportant. Importance of the data of the DRBs/LCHs/LCGs may be determined in a manner such as semi-static configuration (for example, an RRC message) or preconfiguration.

Alternatively, the importance of the data indicated by the second indication information may be at a granularity of a DRB/LCH/LCG. For example, the second indication information may indicate whether a data amount of important/unimportant data in data in one DRB/LCH/LCG (or more DRBs/LCHs/LCGs) of the first device within specific duration exceeds a preset threshold. The DRB/LCH/LCG to which the data indicated by the second indication information belongs may be determined in a manner such as semi-static configuration (for example, an RRC message), preconfiguration, or dynamic indication.

Optionally, the specific duration may be a time interval between two adjacent pieces of second indication information, or may be determined in a manner such as semi-static configuration (for example, an RRC message), preconfiguration, or dynamic indication. For details, refer to the foregoing descriptions of the importance of the data indicated by the fourth field. Details are not described herein again.

Optionally, if the second indication information is sent independently of the information indicating the data amount, for example, the second indication information is reported by using user assistance information, the importance of the data indicated by the second indication information may be irrelevant to the data amount in the first information.

Alternatively, the importance of the data indicated by the second indication information may be related to the data amount in the first information. For example, when the second indication information indicates whether important/unimportant data exceeds the first threshold, the important/unimportant data may be data corresponding to a total data amount reported based on a piece of first information, or may be data corresponding to a total data amount reported based on a plurality of pieces of first information within specific duration.

Optionally, if the second indication information is sent independently of the information indicating the data amount, for example, the second indication information is reported by using user assistance information, there may be a plurality of conditions for sending the second indication information. This is not limited in this embodiment of this application. For example, the condition for sending the first information may be that an important/unimportant data amount, or a proportion of an important/unimportant data amount reaches a first threshold. Further, in this case, the second indication information may indicate that the important/unimportant data reaches the first threshold. Alternatively, the second indication information may be periodically sent, where the periodicity may be determined in a manner such as semi-static configuration (for example, an RRC message), preconfiguration, or dynamic indication. Alternatively, sending of the second indication information may be triggered by sending of the first information, or the second indication information may be sent with sending of the first information. In this scenario, the second indication information may indicate the data amount of the important/unimportant data in the first information, or may indicate the proportion of the data amount of the important/unimportant data in the first information to the total data amount indicated in the first information, or may indicate whether the data amount of the important/unimportant data in the first information reaches the first threshold, or may indicate whether the data amount of the important/unimportant data in the first information relative to the total data amount indicated in the first information reaches the first threshold.

Optionally, when the first device receives, from the second device, an indication (which may be referred to as third indication information) indicating not to send or discard unimportant data, the first device may not send the second indication information, or the second device no longer triggers sending of the second indication information. For example, when the third indication information indicates that the first device does not send or discard unimportant data in a period of time, the first device does not send the second indication information in the period of time. A form of the third indication information is not limited in this specification. How the third indication information indicates not to send or discard the unimportant data may be determined in a manner such as semi-static configuration (for example, an RRC message), preconfiguration, or dynamic indication. For example, the third indication information may indicate a time at which the first device does not send or discard unimportant data. For another example, the third indication information may indicate, in an activation/deactivation manner, the first device not to send or discard unimportant data in a period of time. If the first device receives the third indication information indicating activation, the first device starts not to send or discard the unimportant data. If the first device subsequently receives the third indication information indicating deactivation, the first device stops not sending or discarding the unimportant data.

It may be understood that, in the foregoing embodiments, methods and/or steps implemented by the device may alternatively be implemented by a component (for example, a processor, a chip, a chip system, a circuit, a logic module, or software, for example, a chip or a circuit) that can be used in the device.

The foregoing mainly describes the solutions provided in this application from the perspective of interaction between devices. Correspondingly, this application further provides a communication apparatus. The communication apparatus is configured to implement the foregoing methods. The communication apparatus may be the first device or the second device in the foregoing method embodiments, or an apparatus including the foregoing device, or a component that can be used in the foregoing device.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

FIG. 24 is a diagram of a structure of a communication apparatus 240. For example, as shown in FIG. 24, the communication apparatus 240 includes a transceiver module 2402 and a processing module 2401. For ease of descriptions, FIG. 24 shows only main components of the communication apparatus.

In some embodiments, the communication apparatus 240 may further include a storage module (which is not shown in FIG. 24), configured to store program instructions and data.

In some embodiments, the transceiver module 2402 may also be referred to as a transceiver unit, configured to implement a sending function and/or a receiving function. The transceiver module 2402 may include a transceiver circuit, a transceiver, a transceiver machine, or a communication interface.

In some embodiments, the transceiver module 2402 may include a receiving module and a sending module, respectively configured to perform receiving and sending steps performed by the first device or the second device in the foregoing method embodiments, and/or configured to support another process of the technology described in this specification. The processing module 2401 may be configured to perform a processing (for example, determining or generating) step performed by the first device or the second device in the foregoing method embodiments, and/or configured to support another process of the technology described in this specification.

When the communication apparatus 240 is configured to implement the function of the first device:

The processing module 2401 is configured to generate first information, where the first information includes a first field, and the first field indicates first delay information and whether the first information includes a first data amount; and when the first field indicates that the first information includes the first data amount, the first information further includes a second field, the second field indicates the first data amount, the first data amount is a data amount of first data, and the first delay information is delay information of the first data, where the first field is different from the second field. The transceiver module 2402 is configured to send the first information.

Optionally, the processing module 2401 is further configured to obtain a first status report list, where the first status report list includes N indexes and N data amounts, the N indexes respectively correspond to the N data amounts, the first index is one of the N indexes, and N is a positive integer.

Optionally, the processing module 2401 is further configured to obtain first configuration information, where the first configuration information is used to configure first duration, the first duration is valid transmission duration of the first data, and a start moment of the first duration is an arrival moment of the first data.

Optionally, if the first configuration information is used to configure a packet discard timer, the processing module 2401 is further configured to start the packet discard timer when the first data arrives, and the processing module 2401 is further configured to discard the first data when the packet discard timer expires, where the first duration is running duration of the packet discard timer.

Optionally, the processing module 2401 is further configured to obtain second duration, where the second duration is a remaining transmission delay budget of the first data, a start moment of the second duration is a moment at which the first information is sent, and an end moment of the second duration is an end moment of the first duration.

Optionally, the processing module 2401 is further configured to obtain a first threshold. The first threshold is related to importance that is of second data and that is indicated by a fourth field in the first information, where the second data is data indicated by all second field included in the first information, and a data amount of the second data is a third data amount.

Optionally, the processing module 2401 is further configured to obtain a second threshold. The second threshold is related to importance that is of the first data and that is indicated by a fourth field in the first information.

When the communication apparatus 240 is configured to implement the function of the second device:

The transceiver module 2402 is configured to receive first information, where the first information includes a first field, and the first field indicates first delay information and whether the first information includes a first data amount; and when the first field indicates that the first information includes the first data amount, the first information further includes a second field, the second field indicates the first data amount, the first data amount is a data amount of first data, and the first delay information is delay information of the first data, where the first field is different from the second field. The transceiver module 2402 is configured to send the first information.

Optionally, the processing module 2401 is further configured to obtain a first status report list, where the first status report list includes N indexes and N data amounts, the N indexes respectively correspond to the N data amounts, the first index is one of the N indexes, and N is a positive integer.

Optionally, the transceiver module 2402 is further configured to send first configuration information, where the first configuration information is used to configure first duration, the first duration is valid transmission duration of the first data, and a start moment of the first duration is an arrival moment of the first data.

All related content of the steps in the foregoing method embodiments may be cited in function descriptions of the corresponding functional modules. Details are not described herein again.

In this application, the communication apparatus 240 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, when the communication apparatus 240 in FIG. 24 is a chip or a chip system, a function/implementation process of the transceiver module 2402 may be implemented through an input/output interface (or a communication interface) of the chip or the chip system, and a function/implementation process of the processing module 2401 may be implemented through a processor (or a processing circuit) of the chip or the chip system.

The communication apparatus 240 provided in this embodiment may perform the foregoing methods. Therefore, for technical effects that can be achieved by the communication apparatus, refer to the foregoing method embodiments. Details are not described herein again.

In a possible product form, the communication apparatus 240 may be implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In some embodiments, in hardware implementation, a person skilled in the art may figure out that the communication apparatus 290 may be in a form of the communication apparatus 700 shown in FIG. 7.

In an example, a function/implementation process of the processing module 2401 in FIG. 24 may be implemented by the processor 701 in the communication apparatus 700 shown in FIG. 7 by invoking computer-executable instructions stored in the memory 703. A function/implementation process of the transceiver module 2402 in FIG. 24 may be implemented by the communication interface 704 in the communication apparatus 700 shown in FIG. 7.

It should be noted that the structure shown in FIG. 7 does not constitute a specific limitation on the device structure. For example, in some other embodiments of this application, the device may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It can be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and may be located in one position, or may be distributed on a plurality of network units. Parts displayed as units may be or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a great effect.

Although this application is described with reference to specific features and all embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. An information reporting method, wherein the method comprises:

    sending, by a first device, first information, wherein the first information comprises a first field, wherein the first field indicates first delay information and whether the first information comprises a first data amount; and when the first field indicates that the first information comprises the first data amount, the first information further comprises a second field, the second field indicates the first data amount, the first data amount is a data amount of first data, and the first delay information is delay information of the first data, wherein the first field is different from the second field.

2. The method according to claim 1, wherein the second field comprises a first index, and the first index indicates the first data amount.

3. The method according to claim 2, wherein the method further comprises:
    obtaining, by the first device, a first status report list, wherein the first status report list comprises N indexes and N data amounts, the N indexes respectively correspond to the N data amounts, the first index is one of the N indexes, and N is a positive integer.

4. The method according to any one of claims 1 to 3, wherein the method further comprises:
obtaining, by the first device, first configuration information, wherein the first configuration information is used to configure first duration, the first duration is valid transmission duration of the first data, and a start moment of the first duration is an arrival moment of the first data.

5. The method according to claim 4, wherein the first configuration information is used to configure a packet discard timer; and
starting, by the first device, the packet discard timer when the first data arrives, and discarding the first data when the packet discard timer expires, wherein the first duration is running duration of the packet discard timer.

6. The method according to claim 4 or 5, wherein the method further comprises:
obtaining, by the first device, second duration, wherein the second duration is a remaining transmission delay budget of the first data, a start moment of the second duration is a moment at which the first information is sent, and an end moment of the second duration is an end moment of the first duration.

7. The method according to claim 6, wherein the first delay information comprises a time interval, the time interval indicates the remaining transmission delay budget of the first data, and the time interval comprises the second duration.

8. The method according to claim 4, wherein the valid transmission duration is related to a remaining transmission delay budget of the first data.

9. The method according to any one of claims 1 to 8, wherein the first information further comprises a third field, the third field indicates a first logical channel group, and the first data is data in the first logical channel group.

10. The method according to claim 9, wherein the third field further indicates whether the first information comprises a second data amount, and the second data amount is a data amount of data in the first logical channel group.

11. The method according to claim 10, wherein when the third field indicates that the first information comprises the second data amount, the first field indicates delay information of the data in the first logical channel group.

12. The method according to any one of claims 1 to 11, wherein the first information further comprises a fourth field, the fourth field indicates importance of second data or importance of the first data, the second data is data indicated by all second fields comprised in the first information, and a data amount of the second data is a third data amount.

13. The method according to claim 12, wherein the second data comprises third data, and the third data is unimportant data in the second data; and the method further comprises:
obtaining, by the first device, a first threshold, wherein the fourth field indicates whether a data amount of the third data reaches the first threshold; or the fourth field indicates whether a ratio of the data amount of the third data to the third data amount reaches the first threshold.

14. The method according to claim 12, wherein the first data comprises fourth data, and the fourth data is unimportant data in the first data; and the method further comprises:
obtaining, by the first device, a second threshold, wherein the fourth field indicates whether a data amount of the fourth data reaches the second threshold; or the fourth field indicates whether a ratio of the data amount of the fourth data to the first data amount reaches the second threshold.

15. An information reporting method, wherein the method comprises:

receiving, by a second device, first information, wherein the first information comprises a first field, wherein the first field indicates first delay information and whether the first information comprises a first data amount; and when the first field indicates that the first information comprises the first data amount, the first information further comprises a second field, the second field indicates the first data amount, the first data amount is a data amount of first data, and the first delay information is delay information of the first data, wherein the first field is different from the second field.

16. The method according to claim 15, wherein the second field comprises a first index, and the first index indicates the first data amount.

17. The method according to claim 16, wherein the method further comprises:
obtaining, by the second device, a first status report list, wherein the first status report list comprises N indexes and N data amounts, the N indexes respectively correspond to the N data amounts, the first index is one of the N indexes, and N is a positive integer.

18. The method according to any one of claims 15 to 17, wherein the method further comprises:
sending, by the second device, first configuration information, wherein the first configuration information is used to configure first duration, the first duration is valid transmission duration of the first data, and a start moment of the first duration is an arrival moment of the first data.

19. The method according to any one of claims 15 to 18, wherein the first delay information comprises a time interval, and the time interval indicates a remaining transmission delay budget of the first data.

20. The method according to any one of claims 15 to 19, wherein the first information further comprises a third field, the third field indicates a first logical channel group, and the first data is data in the first logical channel group.

21. The method according to claim 20, wherein the third field further indicates whether the first information comprises a second data amount, and the second data amount is a data amount of data in the first logical channel group.

22. The method according to claim 21, wherein when the third field indicates that the first information comprises the second data amount, the first field indicates delay information of the data in the first logical channel group.

23. The method according to any one of claims 15 to 22, wherein the first information further comprises a fourth field, the fourth field indicates importance of second data or importance of the first data, the second data is data indicated by all second fields comprised in the first information, and a data amount of the second data is a third data amount.

24. The method according to claim 23, wherein the second data comprises third data, and the third data is unimportant data in the second data; and the fourth field indicates whether a data amount of the third data reaches a first threshold; or the fourth field indicates whether a ratio of the data amount of the third data to the third data amount reaches the first threshold.

25. The method according to claim 23, wherein the first data comprises fourth data, and the fourth data is unimportant data in the first data; and the fourth field indicates whether a data amount of the fourth data reaches a second threshold; or the fourth field indicates whether a ratio of the data amount of the fourth data to the first data amount reaches the second threshold.

26. A communication apparatus, wherein the apparatus comprises a module configured to perform the method according to any one of claims 1 to 14.

27. A communication apparatus, wherein the apparatus comprises a module configured to perform the method according to any one of claims 15 to 25.

28. A communication apparatus, wherein the communication apparatus comprises a processor and a memory, the memory is configured to store computer instructions, and when the processor executes the instructions, the communication apparatus is enabled to perform the method according to any one of claims 1 to 25.

29. A computer-readable storage medium, wherein the computer-readable storage medium comprises a computer program or instructions, and when the computer program or the instructions are run on a computer, the method according to any one of claims 1 to 25 is performed.

30. A computer program product, wherein the computer program product comprises instructions, and when the instructions are run on a computer, the method according to any one of claims 1 to 25 is performed.

31. A communication system, wherein the communication system comprises a first device and a second device, the first device is configured to perform the method according to any one of claims 1 to 14, and the second device is configured to perform the method according to any one of claims 15 to 25.

1 bit

| LCG7 | LCG6 | LCG5 | LCG4 | LCG3 | LCG2 | LCG1 | LCG0 | Byte 1 |
|------|------|------|------|------|------|------|------|--------|
| Buffer size (Buffer Size) 1 | | | | | | | | Byte 2 |
| Buffer Size2 | | | | | | | | Byte 3 |

...

| Buffer Sizem | Byte m+1 |
|--------------|----------|

FIG. 1

1 bit

| LCG ID | Buffer Size |
|--------|-------------|

FIG. 2

1 bit

| LCG7 | LCG6 | LCG5 | LCG4 | LCG3 | LCG2 | LCG1 | LCG0 | Byte 1 |
|------|------|------|------|------|------|------|------|--------|
| Buffer Size1 | | | | | | | | Byte 2 |
| delay info1 | | | | | | | | Byte 3 |
| Buffer Size2 | | | | | | | | Byte 4 |
| delay info2 | | | | | | | | Byte 5 |

...

| Buffer Sizem | Byte 2m |
|--------------|---------|
| delay infom | Byte 2m+1 |

FIG. 3

| 1 bit | | | | | | | |
|---|---|---|---|---|---|---|---|
| LCG7 | LCG6 | LCG5 | LCG4 | LCG3 | LCG2 | LCG1 | LCG0 |

Byte 1

| Buffer Size1 |
|---|

Byte 2

| Buffer Size2 |
|---|

Byte 3

...

| Buffer Sizem |
|---|

Byte m+1

| delay info1 |
|---|

Byte m+2

| delay info2 |
|---|

Byte m+3

...

| delay infom |
|---|

Byte 2m+1

FIG. 4

| 1 bit | | | | | | | |
|---|---|---|---|---|---|---|---|

| Buffer Size1 |
|---|

Byte 1

| Buffer Size2 |
|---|

Byte 2

| Buffer Size3 |
|---|

Byte 3

| Buffer Size4 |
|---|

Byte 4

FIG. 5

FIG. 6

FIG. 7

First device

Second device

S803

Trigger first
information

S801. First information, where the first
information includes a first field, and the first
field indicates first delay information and whether
the first information includes a first data amount;
and when the first field indicates that the first
information includes the first data amount, the
first information further includes a second field,
and the second field indicates the first data
amount

S802

Determine delay information of
to-be-transmitted first data of the
first device and a corresponding
first data amount based on the first
information

FIG. 8

| 1 bit | | | | | | | | |
|---|---|---|---|---|---|---|---|---|
| delay index7 | delay index6 | delay index5 | delay index4 | delay index3 | delay index2 | delay index1 | delay index0 | Byte 1 |
| Buffer Size1 | | | | | | | | Byte 2 |
| Buffer Size2 | | | | | | | | Byte 3 |
| ... | | | | | | | | |
| Buffer Sizem | | | | | | | | Byte m+1 |

FIG. 9

| 1 bit | | | | | | | |
|---|---|---|---|---|---|---|---|
| 0 | 1 | 1 | 0 | 0 | 0 | 1 | 0 |
| Buffer Size for delay index1 | | | | | | | |
| Buffer Size for delay index5 | | | | | | | |
| Buffer Size for delay index6 | | | | | | | |

FIG. 10

| 1 bit | | | | | | | |
|---|---|---|---|---|---|---|---|
| LCG ID | | | delay index4 | delay index3 | delay index2 | delay index1 | delay index0 | Byte 1 |
| Buffer Size1 | | | | | | | | Byte 2 |
| Buffer Size2 | | | | | | | | Byte 3 |
| ... | | | | | | | | |
| Buffer Sizem | | | | | | | | Byte m+1 |

FIG. 11

| | LCG7 | LCG6 | LCG5 | LCG4 | LCG3 | LCG2 | LCG1 | LCG0 |
|---|---|---|---|---|---|---|---|---|
| | delay index7 | delay index6 | delay index5 | delay index4 | delay index3 | delay index2 | delay index1 | delay index0 |
| | Buffer Size1 | | | | | | | |
| | Buffer Size2 | | | | | | | |
| | ... | | | | | | | |
| | Buffer Sizem | | | | | | | |

Related information of an LCG with LCG ID = 0

| delay index7 | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |
| ... | | | | | | | |
| Buffer Sizem | | | | | | | |

Related information of an LCG with LCG ID = 1

...

| delay index7 | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |
| ... | | | | | | | |
| Buffer Sizem | | | | | | | |

Related information of an LCG with LCG ID = 7

FIG. 12

| 1 bit | | | | | | | |
|---|---|---|---|---|---|---|---|
| | | | | | | | |
| 1 | 0 | 0 | 1 | 0 | 0 | 0 | 1 |

| delay index7 | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |

**Related information of an LCG with LCG ID = 0**

...

| Buffer Sizem |
|---|

| delay index7 | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |

**Related information of an LCG with LCG ID = 4**

...

| Buffer Sizem |
|---|

| delay index7 | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |

**Related information of an LCG with LCG ID = 7**

...

| Buffer Sizem |
|---|

FIG. 13

| table index | delay index6 | delay index5 | delay index4 | delay index3 | delay index2 | delay index1 | delay index0 | Byte 1 |
|---|---|---|---|---|---|---|---|---|
| Buffer Size1 | | | | | | | | Byte 2 |
| Buffer Size2 | | | | | | | | Byte 3 |

...

| Buffer Sizem | | | | | | | | Byte m+1 |

FIG. 14

| delay index7 | delay index6 | delay index5 | delay index4 | delay index3 | delay index2 | delay index1 | delay index0 | Byte 1 |
|---|---|---|---|---|---|---|---|---|
| table index7 | table index6 | table index5 | table index4 | table index3 | table index2 | table index1 | table index0 | Byte 2 |
| Buffer Size1 | | | | | | | | Byte 3 |
| Buffer Size2 | | | | | | | | Byte 4 |

...

| Buffer Sizem | | | | | | | | Byte m+2 |

FIG. 15

| 1 bit | | | | | | | |
|---|---|---|---|---|---|---|---|

| LCG ID | table Index | delay index3 | delay index2 | delay index1 | delay index0 | Byte 1 |
|---|---|---|---|---|---|---|
| Buffer Size1 | | | | | | Byte 2 |
| Buffer Size2 | | | | | | Byte 3 |

...

| Buffer Sizem | Byte m+1 |
|---|---|

FIG. 16

| | LCG7 | LCG6 | LCG5 | LCG4 | LCG3 | LCG2 | LCG1 | LCG0 |
|---|---|---|---|---|---|---|---|---|

**Related information of an LCG with LCG ID = 0**

| table Index | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |
| ... | | | | | | | |
| Buffer Sizem | | | | | | | |

**Related information of an LCG with LCG ID = 1**

| table Index | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |
| ... | | | | | | | |
| Buffer Sizem | | | | | | | |

...

**Related information of an LCG with LCG ID = 7**

| table Index | delay index6 | delay index5 | delay index4 | delay index3 | delay index2 | delay index1 | delay index0 |
|---|---|---|---|---|---|---|---|
| Buffer Size1 | | | | | | | |
| Buffer Size2 | | | | | | | |
| ... | | | | | | | |
| Buffer Sizem | | | | | | | |

FIG. 17

| | LCG7 | LCG6. | LCG5 | LCG4 | LCG3 | LCG2 | LCG1 | LCG0 |
|---|---|---|---|---|---|---|---|---|
| | table index7 | table index6 | table index5 | table index4 | table index3 | table index2 | table index1 | table index0 |
| | delay index7 | delay index6 | delay index5 | delay index4 | delay index3 | delay index2 | delay index1 | delay index0 |

Related information of an LCG with LCG ID = 0

Buffer Size1

Buffer Size2

...

Buffer Sizem

| delay index7 | delay index6 | delay index5 | delay index4 | delay index3 | delay index2 | delay index1 | delay index0 |
|---|---|---|---|---|---|---|---|

Related information of an LCG with LCG ID = 1

Buffer Size1

Buffer Size2

...

Buffer Sizem

...

| delay index7 | delay index6 | delay index5 | delay index4 | delay index3 | delay index2 | delay index1 | delay index0 |
|---|---|---|---|---|---|---|---|

Related information of an LCG with LCG ID = 7

Buffer Size1

Buffer Size2

...

Buffer Sizem

1 bit

FIG. 18

48

Storage duration

Data

The data arrives
at a first device

Send first
information

Time

FIG. 19

Storage duration

Remaining transmission
delay budget

Data

The data arrives at a
first device (start
moment of valid
transmission duration)

Send first
information

End moment of the
valid transmission
duration

Time

FIG. 20

Storage duration

Data

The data arrives
at a first device

Trigger first
information

Send the first
information

Time

FIG. 21

FIG. 22

FIG. 23

FIG. 24

## INTERNATIONAL SEARCH REPORT

| International application No. |
|---|
| **PCT/CN2024/091785** |

**A.    CLASSIFICATION OF SUBJECT MATTER**

H04W 28/02(2009.01)i

According to International Patent Classification (IPC) or to both national classification and IPC

**B.    FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 缓存状态报告, 缓存, 数据量, 剩余时间, 时延, 延时, 索引, 无, 有, 存在, 指示, BSR, DSR, buffer, size, data, volume, delay, remaining, residual, time, presence, absence, index, bitmap

**C.    DOCUMENTS CONSIDERED TO BE RELEVANT**

| Category* | Citation of document, with indication, where appropriate, of the relevant passages | Relevant to claim No. |
|---|---|---|
| A | CN 115997408 A (BEIJING XIAOMI MOBILE SOFTWARE CO., LTD.) 21 April 2023 (2023-04-21)<br>description, paragraphs [0053]-[0359] | 1-31 |
| A | CN 115804143 A (LG ELECTRONICS INC.) 14 March 2023 (2023-03-14)<br>entire document | 1-31 |
| A | CN 110149718 A (HUAWEI TECHNOLOGIES CO., LTD.) 20 August 2019 (2019-08-20)<br>entire document | 1-31 |
| A | WO 2022238906 A1 (TELEFONAKTIEBOLAGET LM ERICSSON (PUBL)) 17 November 2022 (2022-11-17)<br>entire document | 1-31 |
| A | ERICSSON. "Discussion on BSR Enhancements for XR"<br>*3GPP TSG-RAN WG2 #121bis-e, R2-2303721*, 07 April 2023 (2023-04-07),<br>pages 1-8 | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 July 2024** | **06 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/091785** |

| Patent document cited in search report | | | Publication date (day/month/year) | Patent family member(s) | | | Publication date (day/month/year) |
|---|---|---|---|---|---|---|---|
| CN | 115997408 | A | 21 April 2023 | None | | | |
| CN | 115804143 | A | 14 March 2023 | WO | 2022019435 | A1 | 27 January 2022 |
| | | | | EP | 4186270 | A1 | 31 May 2023 |
| | | | | KR | 20230005315 | A | 09 January 2023 |
| | | | | US | 2023232277 | A1 | 20 July 2023 |
| CN | 110149718 | A | 20 August 2019 | WO | 2019157947 | A1 | 22 August 2019 |
| | | | | US | 2020374888 | A1 | 26 November 2020 |
| | | | | US | 11678351 | B2 | 13 June 2023 |
| | | | | EP | 3737173 | A1 | 11 November 2020 |
| | | | | EP | 3737173 | A4 | 13 January 2021 |
| | | | | EP | 3737173 | B1 | 26 October 2022 |
| WO | 2022238906 | A1 | 17 November 2022 | EP | 4338529 | A1 | 20 March 2024 |
| | | | | JP | 2024518067 | A | 24 April 2024 |
| | | | | CA | 3218304 | A1 | 17 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310522381

- CN 202310816004